# EUROPÄISCHE PATENTSCHRIFT

(11) **EP 0 811 017 B1**
(45) Veröffentlichungstag und Bekanntmachung des Hinweises auf die Patenterteilung: **17.02.1999**
(21) Anmeldenummer: 96904790.1
(22) Anmeldetag: 15.02.1996
(51) Int. Cl.: C08B 11/14, C08B 15/06, C08L 1/06, C02F 1/54, C02F 11/14, D21H 11/22

(54) **ZELLULOSEPARTIKEL, VERFAHREN ZU DEREN HERSTELLUNG UND DEREN VERWENDUNG**
CELLULOSE PARTICLES, METHOD FOR PRODUCING THEM AND THEIR USE
PARTICULES DE CELLULOSE, LEUR PROCEDE DE PRODUCTION ET LEUR UTILISATION

(30) Priorität: 21.02.1995 DE 19505973; 07.06.1995 DE 19520804
(43) Veröffentlichungstag der Anmeldung: 10.12.1997
(73) Patentinhaber: Cellcat GmbH, 5400 Hallein (AT)
(72) Erfinder: OBERKOFLER, Jörg, A-4863 Seewalchen (AT); MOSER, Thomas, A-4020 Linz (AT); SCHMALHOFER, Anton, A-1190 Wien (AT); SPEDDING, Jeffrey, F., A-5081 Anif (AT)
(74) Vertreter: Kador & Partner
(86) Internationale Anmeldenummer: EP9600650
(87) Internationale Veröffentlichungsnummer: WO9626220

(56) Entgegenhaltungen:
- DE-A- 2 349 501
- FR-A- 2 357 575
- US-A- 4 624 743
- ABSTRACT BULLETIN, Bd. 58, Nr. 5, 1987, APPLETON WI USA, XP000031344 "abstract no. 6548" & JP,A,86 258 801 (NITTO BOSEKI CO. LTD) 17.November 1986
- DATABASE WPI Week 7905 Derwent Publications Ltd., London, GB; AN 79-09043 XP002006237 & JP,A,53 145 892 (TOKYO PULP KK) , 19.Dezember 1978
- DATABASE WPI Week 8337 Derwent Publications Ltd., London, GB; AN 83-762645 XP002006238 & JP,A,58 133 899 (KURITA WATER IND KK) , 9.August 1983

## Beschreibung

Die Erfindung bezieht sich auf Zellulosepartikel sowie auf ein Verfahren zur Herstellung derselben. Sie hat ferner Anwendungen der Zellulosepartikel zum Gegenstand.

Durch verschiedene Maßnahmen wie Kreislaufeinengung, vermehrte Verwendung von Deinking- und Hochausbeutefaserstoffen, wie Holzschliff und TMP (thermomechanischem Pulp), und Neutralfahrweise ist es in der Papierindustrie zu einem Ansteigen der Störstoffbelastung in den Wasserkreisläufen gekommen.

Störstoffe wurden vorerst als alle jene Stoffe definiert, die die Wirksamkeit kationischer Retentionshilfsmittel im Papierstoff vermindern, also jener Stoffe, die zugesetzt werden, um die Retention des Faser-/Füllstoffgemisches auf dem Sieb zu verbessern. Neuerdings wurde diese Definition weiter präzisiert. Damit sind Störstoffe gelöste oder kolloidal gelöste anionische Oligomere oder Polymere und nichtionische Hydrokolloide.

Diese Störstoffe wirken sich in unterschiedlicher Weise aus. Sie beeinträchtigen die Wirkung von Retentionshilfsmitteln, Trocken- und Naßfestmitteln, also die Festigkeit des Papiers erhöhenden Substanzen, und führen außerdem zu Ablagerungen im Papiermaschinenkreislauf, Formations- und Entwässerungsstörungen und einem Abfall der Papierfestigkeit, der Weiße und Opazität.

Um die negativen Auswirkungen dieser Störstoffe auf die Papierherstellung zu beseitigen, setzt man Alaun, Polyaluminiumchloride, nieder- und hochmolekulare Fixiermittel, kationische Stärke und anorganische Adsorptionsmittel ein. Alle diese Substanzen lagern sich mit Hilfe elektrostatischer Wechselwirkungen an die anionischen Störstoffe an und bilden mit diesen Komplexe. Durch Bindung dieser Komplexe an die Fasern beziehungsweise durch Filtrationseffekte auf dem Sieb werden diese Aggregate aus dem Papiermaschinensystem entfernt.

All diese Produkte haben jedoch die ihnen eigenen Nachteile, so können Aluminiumsalze bei der Neutralfahrweise, die durch die zunehmende Verwendung von Calciumcarbonat als Füllstoff Bedeutung gewinnt, nur begrenzt eingesetzt werden, da sie in diesem pH-Bereich nicht kationisch geladen und damit wenig wirksam sind.

Beim Einsatz von hochgeladenen, kationischen Polyelektrolyten besteht demgegenüber das Problem, daß exakt dosiert werden muß. Ansonsten kann es zu einer Überkationisierung des Papiermaschinenkreislaufs und damit zu einer kationischen Dispergierung kommen. Das bedeutet, daß eine schlechte Feinstoffretention und verminderter Leimung auftreten kann.

In JP-A- 61-258 801 wird kationisch regenerierte Zellulose beschrieben, wobei die Kationizität dazu dient, das Farbaufnahmevermögen der Fasern zu erhöhen. Bei der dort beschriebenen Arbeitsweise wird mit geringer Konzentration des Kationisierungsmittels gearbeitet, um die Anzahl der kationischen Gruppen in Grenzen zu halten, weil dies zu einem Festigkeitsverlust der Fasern führen wurde. Aus R.A. Young et al., "Cellulose: Structure, Modification and Hydrolysis", John Wiley and Sons, 1986, S. 102-110 läßt sich entnehmen, daß die Porosität von Zellulose mit Natronlauge erhöht wird. In JP-A- 53-145 892 wird ein Verfahren zur Kationisierung von Papierrohstoffen an sich beschrieben. Bei der dort beschriebenen Verfahrensweise werden keine kationischen Gruppen im Inneren der Zellulosesubstanz erhalten. Dies trifft im wesentlichen auch auf die in DE-A-23 49 501 und US-A- 4 624 743 beschriebenen Arbeitsweisen zu. In EP-A- 377 046 und DE-A- 2 005 408 sind makroporöse Zellstoffpartikel beschrieben, die kationisiert werden. Bei dieser Kationisierung werden jedoch keine kationischen Gruppen im Inneren der Zellulosesubstanz selbst erhalten, sondern lediglich auf der äußeren oder inneren Oberfläche der porösen Artikel. In JP-B- 59-38 040 wird beschrieben, wasserlösliche kationische Substanzen zusammen mit Polyacrylamid einzusetzen.

Aufgabe der Erfindung ist es, neue Zellulosepartikel bereitzustellen, die sich durch besondere Eigenschaften und Verwendungsmöglichkeiten auszeichnen. Aufgabe der Erfindung ist es ferner, Zellulosepartikel bereitzustellen, mit denen Störstoffe im Papier-, Maschinen-, Wasserkreislauf in möglichst großer Menge im Papier gebunden und damit aus dem Kreislauf entfernt werden können, ohne daß die vorstehend geschilderten Probleme auftreten.

Aufgabe der Erfindung ist es ferner, weitere Verwendungsmöglichkeiten der Zellulosepartikel anzugeben.

Der Erfindung liegt die Erkenntnis zugrunde, daß diese Aufgabe durch Zellulosepartikel gelöst werden kann, die kationische Gruppen auch im Inneren der Partikel aufweisen.

Dabei liegen im allgemeinen wenigstens 10%, vorzugsweise wenigstens 50%, insbesondere wenigstens 90% der kationischen Gruppen im Inneren der Partikel vor. Im Ergebnis werden also Zellulosepartikel geschaffen, die über ihren gesamten Querschnitt verteilt an die Zellulose gebundene kationische Gruppen besitzen.

Damit die Partikel eine ausreichende Kationizität aufweisen, sollte je 100 vorzugsweise je 50 Anhydroglucoseeinheiten der Zellulose wenigstens eine kationische Gruppe vorliegen.

Zur Herstellung der erfindungsgemäßen Zellulosepartikel wird die Zellulose mit einem Kationisierungsmittel umgesetzt.

Als Zellulose kann dabei unsubstituierter Zellstoff eingesetzt werden, jedoch auch substituierte Zellulosen, insbesondere Zellulose-Ester oder -Ether, wie Methylzellulose, Carboxylmethylzellulose, Zellulosesulfat, Zelluloseacetat oder Chitosan. Der Substitutionsgrad oder DS (degree of substitution) sollte dabei kleiner als 1 sein, das heißt, im Durchschnitt sollte von den drei OH-Gruppen der Anhydroglucoseeinheiten der Zellulose höchstens eine OH-Gruppe substituiert sein. Der DS darf nämlich nicht zu groß sein, damit in ausreichender Zahl Hydroxylgruppen für die Umsetzung mit dem Kationisierungsmittel zur Verfügung stehen. Ferner kann als Zellulose Alkali - insbesondere Natriumzellulose eingesetzt werden.
Die Umsetzung der Zellulose mit dem Kationisierungsmittel kann als Feststoffreaktion durchgeführt werden. Dabei kann als Zellulose Alkalizellulose verwendet werden, die in einem Kneter mit dem Kationisierungsmittel umgesetzt wird.

Zur Herstellung der erfindungsgemäßen Zellulosepartikel kann die Zellulose auch aufgelöst und die gelöste Zellulose mit dem Kationisierungsmittel versetzt werden, worauf die kationisierte gelöste Zellulose zu den Zellulosepartikeln ausgefällt wird.

Das Auflösen der Zellulose kann durch Überführen der Zellulose mit Natronlauge und Schwefelkohlenstoff in Natrium-Xanthogenat erfolgen, aber auch durch Auflösen in N-Methylmorpholin-N-oxid, Lithiumchlorid-Dimethylacetamid, Tetraminkupfer-Kupfer (II) -hydroxid Cuen oder Cuoxam.

N-Methylmorpholin-N-oxid-Monohydrat weist einen Schmelzpunkt von ca. 70°C auf. Es kann daher als Feststoff leicht zurückgewonnen werden. Im Gegensatz zum Xanthogenat tritt ferner keine Geruchsbelästigung auf, auch fallen keine Abfallstoffe, wie Natriumsulfat, an.

Im Fall wasserlöslicher Zellulosederivate kann Wasser als Lösungsmittel verwendet werden. Wasserlösliche Zellulosederivate werden bevorzugt über den Viskoseprozeß dargestellt.

Die kationischen Gruppen können an die Hydroxylgruppen der Zellulose kovalent gebunden sein. Es ist jedoch auch eine Bindung über Ionen- und/oder Wasserstoffbrücken möglich.

Als Kationisierungsmittel können Aluminiumsalze, wie Polyaluminiumchlorid oder Natriumaluminat eingesetzt werden. Das Polyaluminiumchlorid kann dabei teilweise hydrolisiert sein. Das Aluminat wird zusammen mit dem Xanthogenat mit Schwefelsäure ausgefällt.

Als Kationisierungsmittel können ferner kationische Polyelektrolyte, wie Polydialkyl-di-allyl-ammonium-Salze, insbesondere Polydialkyl-di-allyl-ammoniumchlorid (Poly-Dadmac), Dicyandiamid, Dicyandiamidkondensat, Polyamine, Polyimine, wie Polyethylenimin, oder Ionene verwendet werden. Weiterhin können als Kationisierungsmittel reaktive Monomere eingesetzt werden, beispielsweise primäre, sekundäre und tertiäre Amine, quaternäre Ammonium Basen mit jeweils wenigstens einem mit einer Hydrogruppe der Zellulose umsetzbaren Rest.

Wenn das Kationisierungsmittel nicht mit den Hydroxylgruppen der Anhydroglucoseeinheiten der Zellulose reagiert, wie bei Aluminiumsalzen und kationischen Polyelektrolyten, ändert sich die Löslichkeit der Zellulose nicht oder nur wenig. In diesem Fall kann das Verhältnis des Kationisierungsmittels zur Zellulose in weiten Grenzen schwanken. Normalerweise beträgt jedoch das Gewichtsverhältnis der Aluminiumsalze oder der kationischen Polyelektrolyte zur Zellulose 0,03:bis 1,1, bezogen auf die absolut trockenen Substanzen (atro).

Die reaktiven Monomeren werden hingegen vorzugsweise in einer solchen Menge der Zellulose zugesetzt, daß der Substitutionsgrad (DS) höchstens 0,2 beträgt. Andernfalls können nämlich Zellulosepartikel mit einer zu hohen Wasserlöslichkeit entstehen.

Als Kationisierungsmittel mit reaktiven Gruppen, also reaktive Monomere, können insbesondere 2-Chlorethan-trimethylammonium-Chlorid oder Propoxidtrimethylammonium-Chlorid verwendet werden.

Durch Fällen von gelöster Zellulose mit hohem Substitutionsgrad, beispielsweise Carboxylmethylzellulose, in wässriger Lösung mit kationischen Polyelektrolyten können die erfindungsgemäßen kationisierten Zellstoffpartikel ebenfalls erhalten werden.

Da die kationischen Ladungen in den erfindungsgemäßen Zellulosepartikeln vorwiegend im Innern der Partikel fixiert sind, können durch Mahlen der Partikel weitere Ladungen zugänglich gemacht werden, die als funktionelle Gruppen wirken können.

Falls reaktive Monomere als Kationisierungsmittel verwendet werden, sind die reaktiven Gruppen mit Zellulose-Hydroxylgruppen umsetzbare Reste. Bei dem umsetzbaren Rest kann es sich beispielsweise um ein Halogenatom, Epoxygruppen oder Iminogruppen handeln. Um eine Epoxygruppe zu bilden, kann beispielsweise ein Halogenatom an einem und eine Hydroxylgruppe an dem benachbarten Kohlenstoffatom eines Alkylrestes des Amines bzw. der quarternären Ammonium-Base gebunden sein. Beispielsweise kann die Ammonium-Verbindung 3-Chlor-2 (Hydroxylpropyl)-Trimethylammoniumchlorid sein.

Um insbesondere bei Dicyandiamid und anderen Polyelektrolyten eine Vernetzung einzelner Zellulosefasern zu verhindern, kann die Zellulose relativ hoch verdünnt mit dem Kationisierungsmittel umgesetzt werden. D.h. die gelöste Zellulose liegt beim Versetzen mit dem Kationisierungsmittel in einer Konzentration von vorzugsweise höchstens 2 Gewichtsprozent insbesondere höchstens 1 Gewichtsprozent vor.

Das Umsetzen der gelösten Zellulose mit dem Kationisierungsmittel erfolgt vorzugsweise unter Rühren, und zwar in einem Zeitraum von beispielsweise 10 Sekunden bis 30 Minuten je nach Reaktionsfähigkeit des Kationisierungsmittels. Bei einer zu langen Reaktionszeit kann die erwähnte Gefahr einer Vernetzung bestehen.

Das Ausfällen der gelösten kationisierten Zellulose kann beispielsweise durch feine Spinndüsen in Fällbädern erfolgen.

Falls als gelöste Zellulose Zellulosexanthogenat verwendet wird, kann das Fällungsmittel beispielsweise ein Polyaluminiumchlorid oder Schwefelsäure sein, wobei der Schwefelsäure gegebenenfalls Salze, z.B. ein Sulfat, wie Natrium- oder Zinksulfat, zugesetzt sein kann.

Wie sich gezeigt hat, können die Zellulosepartikel jedoch auch dadurch erhalten werden, daß man der gelösten kationisierten Zellulose unter Rühren ein Fällungsmittel zusetzt und es dadurch zu einer Ausfällung direkt im Reaktor kommt.

Die Größe der Zellulosepartikel bzw. die Länge der ausgefällten Zellulosefasern ist dann unter anderem von der Verdünnung der gelösten kationisierten Zellulose sowie von der Rührgeschwindigkeit beim Ausfällen abhängig.

Die Partikelgröße der kationisierten Zellulose liegt vorzugsweise bei einer mittleren Teilchengröße von 0,001 bis 10 mm, und insbesondere einer mittleren Teilchengröße von 0,1 bis 1 mm. Vorzugsweise sind die Partikel kugelförmig. Sie können jedoch auch in Form von Fasern vorliegen.

Eine gewünschte Größe und Struktur der Zellulosepartikel kann insbesondere auch durch Mahlen erreicht werden.

Zur Zerkleinerung der Zellulosepartikel sind die verschiedensten Mahlvorrichtungen geeignet, und insbesondere die Standardgeräte zur Zellstoffmahlung, wie Jokromühle, Kegelrefiner oder Scheibenrefiner. Auch die üblicherweise für das Mahlen von Papierfasern verwendeten Mahlgeräte sind bestens geeignet. Durch das Mahlen erfolgt eine wesentliche Vergrößerung der Oberfläche der Zellulosepartikel und damit eine erhöhte Kationizität und Wirksamkeit.

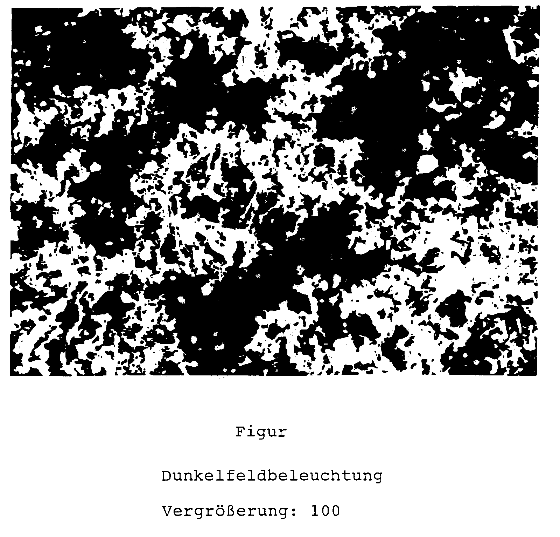

In der einzigen Figur sind Zellulosepartikel in einer Dunkelfeldwiedergabe gezeigt. Die Partikel befinden sich in gequollenem Zustand. Die Partikel sind an sich dreidimensional kugelförmig. Sie sind jedoch in der Abbildung zwischen den Objektträgern gequetscht. Der Vergrößerungsfaktor beträgt 100. Die willkürliche Fibrillenstruktur mit Fibrillen im Bereich von 10 bis 50 µm ist gut erkenntlich.

Bei der Verwendung der Zellulosepartikel bei der Papierherstellung versteht sich, daß die Partikelgröße nicht dicker als die Papierdicke sein darf, während eine Faserstruktur von Vorteil sein kann.

Wenn die kationisierten Zellulosefasern als Mittel zur Fixierung der Störstoffe im Papier verwendet werden, sollten sie nicht länger als 0,5 mm sein, um Formationsprobleme auszuschließen. Die kationisierten Zellulosefasern sind vorzugsweise nicht länger als 0,1 mm.

Bei anderen Anwendungen, wie als Flockungsmittel, insbesondere als Flockungsmittel zur Abwasserreinigung, wird jedoch meist eine mittlere Teilchengröße von 0,1 - 1 mm bevorzugt.

Die Zellulosepartikel werden als Feststoff oder in Form einer Suspension eingesetzt.

Die erfindungsgemäßen Zellulosepartikel können als wasserunlöslich bezeichnet werden. Darunter wird verstanden, daß sich die Zellulosepartikel bei den üblichen Einsatzzeiten und Verwendungsmethoden in Wasser nicht oder nur sehr geringfügig lösen. Die Verweilzeiten liegen im Rahmen von Minuten.

Bei den erfindungsgemäßen Zellulosepartikeln sind die kationischen Gruppen kovalent an die Zellulose gebunden oder innerhalb der Zellulosemembran immobilisiert. Durch diese kovalente Bindung bzw. Immobilisierung kommt es im Rahmen des Einsatzes der Zellulosepartikel zu keinen erheblichen Verlusten an kationischer Aktivität.

Die erfindungsgemäßen Zellulosepartikel werden als Feststoffe eingesetzt, wobei sie bis zu 80 % Wasser enthalten können. Es kommt auch in Betracht, diese Zellstoffpartikel zu trocknen und als trockenes Granulat einzusetzen. Alternativ kommt der Einsatz in Form einer Suspension, beispielsweise mit 3 % Feststoffgehalt, oder mit höheren Feststoffgehalten bis 20 % in Form einer Paste, in Betracht.

Nach dem Ausfällen der gelösten kationisierten Zellulosepolymerketten sind die kationischen Gruppen über den gesamten Querschnitt der Zellulosepartikel in denselben gleichmäßig verteilt enthalten.

Die im Innern der Zellulosepartikel vorhandenen kationischen Gruppen sind unempfindlich gegenüber mechanischen Einwirkungen, werden also z.B. durch die beim Rühren auftretenden Scherkräfte nicht entfernt.

Die erfindungsgemäß kationisierten Zellulosepartikel stellen ein hervorragendes Mittel zur Fixierung von Störstoffen im Papier dar, die bei der Papierherstellung in den Wasserkreisläufen vorliegen.

Durch die Verwendung der kationischen Zellulose werden die Papiereigenschaften nicht negativ beeinflußt, im Gegensatz zu den bekannten Mitteln zur Fixierung der Störstoffe im Papier, wie z.B. Bentonit.

Zugleich führt die erfindungsgemäße kationisierte Zellulose zur Bindung der Feinstoffe, insbesondere der feinen Füllstoffteilchen, an die Fasern, wodurch die Feinstoff- bzw. Ascheretention und die Verteilung der Feinstoffe im Papier verbessert und damit ein homogeneres Blatt erhalten wird. D.h. mit der erfindungsgemäßen kationisierten Zellulose wird ermöglicht, daß an der dem Sieb zugewandten Seite des Zellulosepartikel/Füllstoff-Gemischs die Feinstoffe ebenso zurückgehalten werden wie an der Oberseite.

Vor allem aber werden mit der erfindungsgemäßen kationisierten Zellulose anionische Störstoffe, die, wie eingangs erwähnt, heutzutage in größerer Menge im Papiermaschinenkreislauf auftreten, an die Zellulosepartikel des Zellulosepartikel/Füllstoff-Gemischs gebunden und damit aus dem Kreislauf ausgetragen.

Insbesondere, wenn die erfindungsgemäße kationisierte Zellulosefaser kurz ist, also eine Länge von z.B. 0,1 mm oder weniger aufweist, wird darüberhinaus die Papierfestigkeit von gefülltem Papier nachweislich erhöht, also eine für die Beurteilung der Papierqualität ganz entscheidende Eigenschaft. Möglicherweise hängt dies damit zusammen, daß sich die kurzen kationisierten Zellulosepartikel in den Zwischenräumen der längeren Zellulosefasern des Papiers ansammeln und dort Brükken zwischen den Zellulosefasern des Papiers bilden.

In der Papierindustrie können die erfindungsgemäßen kationisierten Zellulosepartikel also als festigkeitssteigerndes Mittel bei gefülltem Papier oder als Mittel zur Fixierung von Störstoffen im Papier eingesetzt werden, wodurch diese Störstoffe aus dem Wasserkreislauf entfernt werden.

Außerdem stellen die erfindungsgemäßen kationisierten Zellulosepartikel ein Mittel zur Retention von Feinstoffen im Papier bei der Papierherstellung dar. D.h. feine Asche- oder sonstige Füllstoffteilchen oder sonstige feine Feststoffteilchen, die dem Papier einverleibt werden sollen, werden durch die erfindungsgemäßen kationisierten Zellulosepartikel retendiert, also vor dem Auswaschen geschützt und damit im Papier zurückgehalten. Dadurch wird eine erhöhte Homogenität und Dimensionsstabilität des Papiers erreicht. Da die Feinstoffe besser gebunden werden, wird zugleich die Neigung zum Stauben bei der Verarbeitung des Papiers herabgesetzt. Darüberhinaus führen die erfindungsgemäßen kationisierten Zellulosepartikel zu einer Festigkeitssteigerung bei gefüllten Papieren.

Die Erfindung umfaßt also insbesondere ein Verfahren zur Herstellung von Papier, wobei ein geschlossener Wasserkreislauf zur Anwendung kommt, dem die erfindungsgemäßen Zellulosepartikel zugesetzt werden. Damit werden die Störstoffe gebunden und unschädlich gemacht. Dabei werden i.a. 0,1 kg kationisierte Zellulosepartikel zugesetzt pro to Papierstoff (atro). Die obere Grenze liegt aus Kostengründen im allgemeinen bei 10 kg/to.

Zugleich stellen die erfindungsgemäßen kationisierten Zellulosepartikel ein hervorragendes Flockungshilfsmittel für schwierig zu fällende organische Schlämme dar. So können die erfindungsgemäßen kationisierten Zellulosepartikel insbesondere als Flockungsmittel zur Abwasserreinigung eingesetzt werden, vor allem in Kläranlagen zum Ausflocken von Faulschlamm. Gegenüber den herkömmlichen Flockungsmitteln, insbesondere Polyelektrolyten, weisen die erfindungsgemäßen kationisierten Zellulosepartikel eine stark vergrößerte, stabil kationische Oberfläche auf, auf der die Präzipitation der auszuflockenden Substanzen stattfinden kann. Im Gegensatz zu den herkömmlichen Flockungsmitteln entsteht so eine stabilere Flocke, die auch besser entwässerbar ist.

Es hat sich gezeigt, daß der Einsatz der erfindungsgemäßen Zellulosepartikel in Kombination mit wasserlöslichen Polymeren überraschende Ergebnisse liefert, und zwar sowohl beim Einsatz der Zellulosepartikel bei der Schlammentwässerung als auch bei deren Einsatz bei der Papierherstellung.

Besonders gute Ergebnisse werden in Kombination mit kationischen, wasserlöslichen Polymeren erzielt. Es kommen aber auch Kombinationen mit anionischen oder nichtionischen Polymeren in Betracht.

Als besonders vorteilhafte Kombination hat sich die Kombination der erfindungsgemäßen Zellulosepartikel mit wasserlöslichem kationischem Polyacrylamid herausgestellt. Neben Polyacrylamid kommen insbesondere Polyethylenimin sowie wasserlösliche Cellulosederivate, beispielsweise kationische Hydroxyethylcellulosen oder Carboxymethylcellulosen in Betracht.

Bei der Schlammentwässerung werden die erfindungsgemäßen, wasserunlöslichen Zellulosepartikel vorzugsweise in Mischung mit den wasserlöslichen Polymeren zugegeben. Eine getrennte Zugabe ist jedoch ebenso möglich.

Bezogen auf das wasserlösliche Polymer, beispielsweise Polyacrylamid, kann der Zusatz von erfindungsgemäßen Zellulosepartikeln in ganz weiten Grenzen von 0,1 bis 99,9 Gew.% liegen. Es werden jedoch Gewichtsprozentsätze an Zellulosepartikeln von 1 bis 50 %, vorzugsweise 1 bis 10 %, besonders 2 bis 7 %, und insbesondere 3 bis 5 %, bevorzugt. Der Prozentsatz an Zellulosepartikeln wird bestimmt von der Schlammqualität, dem gewünschten Trockengehalt des Schlammes sowie der Durchsatzkapazität.

Werden die erfindungsgemäßen Zellulosepartikel in Kombination mit einem kationischen Polymeren eingesetzt, werden die beiden Komponenten vorzugsweise trocken vorgemischt, gelagert und transportiert. Vor der Anwendung wird die Mischung in Wasser aufgelöst bzw. dispergiert und direkt ohne Filtration, die für Schlamm nicht notwendig ist, diesem zudosiert.

Dieser bevorzugte Einsatz der Mischung von Zellulosepartikeln und Polymeren ist nur bei kationischen Polymeren, nicht jedoch bei anionischen Polymeren, möglich, da letztere mit den kationischen Zellulosepartikeln reagieren würden. Anionische Polymere werden deshalb getrennt von den Zellulosepartikeln zugegeben.

Bei dem kombinierten Einsatz von erfindungsgemäßen Zellulosepartikeln und anionischem Polymer werden die Zellulosepartikel getrennt gelagert, transportiert, aufbereitet und dosiert, und zwar in trockener Form oder in Form einer wässrigen Suspension. Das anionische Polymer kann ebenfalls trokken, in Wasser gelöst, oder als Emulsion gelagert und transportiert werden. Jedenfalls müssen beide Komponenten getrennt als wässrige Lösung oder Suspension dem Schlamm zudosiert werden. Beide Möglichkeiten der Dosierung, nämlich zuerst Zellulosepartikel oder zuerst Polymer, kommen in Betracht.

Der synergistische Effekt, der durch die Kombination von wasserlöslichen Polymeren und wasserunlöslichen Zellulosepartikeln erreicht wird, ist beeindruckend. Der Wirkungsmechanismus ist jedoch nicht bekannt. Beispielsweise haben Versuche mit biologischem Schlamm gezeigt, daß die Verwendung von 94,3 Gew.% Polyacrylamid und 5,7 Gew.% Zellulosepartikel anstatt der Verwendung von reinem Polyacrylamid eine Steigerung der Geschwindigkeit der Siebbandpresse von 62 auf 100 % erlaubt und die Schlammarbeitsmenge von 28 m³/h auf 33 m³/h gesteigert werden konnte.

Andere Versuche, deren Ziel ein höherer Trockengehalt war, haben ebenso zu beeindruckenden Ergebnissen geführt. So hat der Zusatz von nur 3 Gew.% Zellulosepartikel zu dem eingesetzten Polyacrylamid eine Erhöhung des Trockengehaltes nach der Pressung von 48 auf 53 % ergeben.

Der kombinierte Einsatz von kationischen, wasserlöslichen Polymeren und den erfindungsgemäßen wasserunlöslichen Zellulosepartikeln hat auch besonders bei der Papierherstellung zu überraschenden Ergebnissen geführt.

Bei der Papierherstellung wird eine getrennte Zugabe von Zellulosepartikeln und wasserlöslichen Polymeren bevorzugt. Es ist vorteilhaft, das wasserlösliche Polymer als Lösung kontinuierlich vor der Dosierstelle zu filtrieren, um die Papierqualität schädigende Gelteilchen herauszufiltrieren. Es ist besser, die Zellulosepartikel vorher und die wasserlöslichen Polymere erst später zuzugeben. Insbesondere ist es vorteilhaft, die Zellulosepartikel in der Anfangsphase der Papierherstellung zuzugeben, während die wasserlöslichen Polymere in der Endphase kurz vor der Blattbildung zugegeben werden.

Im zeitlichen Ablauf ausgedrückt, wobei von einer Gesamtkreislaufdauer von etwa 90 Sekunden ausgegangen wird, werden die Zellulosepartikel in 30 bis 60 Sekunden vor der Aufgabe des Papierstoffes auf den Stoffauflauf zugegeben, und die wasserlöslichen Polymere etwa 10 bis 20 Sekunden vorher.

Das Mischungsverhältnis von Zellulosepartikeln und kationischen Polymeren ist in weiten Grenzen, beispielsweise von 90:10 bis 10:90, variierbar. Es wird jedoch bevorzugt, 40 bis 60 % Zellulosepartikel, bezogen auf das Gewicht, zuzugeben. Die bevorzugte Menge hängt u.a. von der Papiersorte ab. Höhere Prozentsätze werden bei Papieren mit wenig Füllstoff bevorzugt.

Bei der Papierherstellung werden die Zellulosepartikel vorzugsweise in Form einer Suspension in Wasser, beispielsweise einer 3 %igen Suspension, zugegeben. Die Polymerlösung wird als wässrige Lösung, beispielsweise in einer Konzentration von 0,2 bis 0,8 %, zugegeben.

Auch bei Verwendung von anionischen wasserlöslichen Polymeren in Kombination mit Zellulosepartikeln werden die gleichen Mischungsverhältnisse und Zugabeformen bzw. Zugabezeiten bevorzugt.

Es hat sich gezeigt, daß durch die Verwendung der erfindungsgemäßen Zellulosepartikel bei der Papierherstellung größere Mengen an Füllstoff im Papier erreicht werden können. Dies ist aus wirtschaftlichen Gründen erstrebenswert, da die Füllstoffe billiger sind als Papierfasern. Durch Füllstoffe sind bessere Eigenschaften erzielbar, und zwar insbesondere eine Verbesserung der Opazität und der Bedruckbarbeit.

Ein weiterer Vorteil, der sich bei der Zugabe von Zellulosepartikeln gezeigt hat, ist eine bessere Formation des Papiers und damit eine bessere Papierqualität.

Unter dem Begriff "Zellulosepartikel" werden im Rahmen dieser Anmeldung auch Fasern in jeglicher Form und Länge, insbesondere auch gesponnene Fasern, verstanden. Zellulosefasern haben vielfältige Anwendungen im technischen und textilen Bereich.

Das Besondere der erfindungsgemäßen faserförmigen Zellulosepartikel liegt in ihrem stark verbesserten Anfärbeverhalten. Insbesondere können die Fasern mit günstigen anionischen Farbstoffen gefärbt werden. Die gefärbten Fasern zeichnen sich durch besondere Farbechtheit aus, was darauf zurückzuführen ist, daß die kationischen Gruppen, die mit den Farbstoffen reagieren, in der Zellulosefaser immobilisiert oder kovalent an die Zellulosemoleküle gebunden sind.

Die nachstehenden Beispiele dienen der weiteren Erläuterung der Erfindung.

### Beispiel 1

Eine 8,5 gewichtsprozentige, wässrige Natriumzellulosexanthogenat-Lösung wird mit 0,02 N Natriumhydroxid im Verhältnis 1:25 verdünnt.

250 ml der verdünnten Natriumzellulosexanthogenat-Lösung werden unter Rühren (350 U/min) mit 1 ml einer 40-gewichtsprozentigen, wässrigen Lösung von Dicyandiamid versetzt.

Nach fünfminütigem Rühren wird die Geschwindigkeit erhöht (600 U/min), worauf 5 ml einer 18-gewichtsprozentigen, wässrigen Polyaluminiumchloridlösung zugetropft werden.

Die ausgefällten Zellulosefasern werden solange mit Wasser gewaschen, bis der Überstand keine kationischen Ladungen mehr aufweist.

### Beispiel 2

100 kg Zellstoff werden mit 18 %iger wässriger NaOH in Alkalizellulose (AC) übergeführt. In die abgepresste AC werden 20 kg 3-Cl-2-Hydroxy-propantrimethylammoniumchlorid zugegeben. Die Reaktion wird unter Kühlung bei 35 °C im Kneter über 6 Stunden durchgeführt. Anschließend wird mit HCl neutralisiert und mit Wasser gewaschen. Die erhaltene kationisierte Zellulose wird getrocknet und auf die erforderliche Partikelgröße gemahlen.

### Beispiel 3

Zum Nachweis der Kationizität der nach dem an Beispiel 1 erhaltenen Zellulosefasern wird Methylrot als anionischer Farbstoff verwendet. Es wurde die Kationizität herkömmlicher gefällter, unmodifizierter Zellulosefasern mit den nach dem Beispiel 1 hergestellten kationisierten Zellulosefasern verglichen. Die Fasern wurden dazu jeweils mit der Methylrotlösung vermischt und dann zentrifugiert. Nach der Zentrifugation wurde die Farbe der Fasern und die Färbung des Überstands beurteilt.

Bei den nach dem Beispiel 1 hergestellten kationisierten Zellulosefasern trat im Gegensatz zu unmodifizierten Zellulosefasern eine deutliche Färbung der Fasern und zugleich eine Entfärbung des Überstandes auf.

Als Kontrolle wurde Methylenblau als kationischer Farbstoff verwendet. Bei den schwach anionischen unmodifizierten Zellulosefasern wurde eine Färbung der Fasern beobachtet, während sich die nach dem Beispiel 1 hergestellten kationisierten Zellulosefasern nicht verfärbten. Auch trat bei den kationisierten Fasern keine Entfärbung des Überstandes auf.

### Beispiel 4

Um die Wirksamkeit der nach dem Beispiel 1 hergestellten Zellulosefasern zu prüfen, wurde Papierstoff aus einer holz- und aschehaltigen Produktion (Rohstoff für Naturtiefdruck) mit den nach dem Beispiel 1 hergestellten kationischen Zellulosefasern versetzt, wobei Blätter nach dem Standardverfahren gebildet wurden. Das Blattgewicht, der Berstdruck, die Weiterreißfestigkeit und die Formation im Papier wurden beurteilt. Es zeigte sich, daß die nach dem Beispiel 1 hergestellten kationisierten Zellulosefasern einen positiven Einfluß auf die Verteilung der Feinstoffe, einschließlich der Ascheverteilung, sowie die Festigkeit und Formation im Vergleich zu einem gleichzeitig durchgeführten Vergleichsversuch (ohne Zusatz solcher kationisierter Fasern) aufwiesen.

### Beispiel 5

Mit nach dem Beispiel 1 hergestellten kationisierten Zellulosefasern mit einer durchschnittlichen Länge von etwa 4 cm wurde ein Flockungsversuch mit einem schwierig zu flockenden, da sehr feinen Faulschlamm einer Abwasserkläranlage durchgeführt. Es zeigte sich, daß die kationisierten Zellulosefasern zu einer guten Flockung, einer hohen Absetzgeschwindigkeit und einem klaren Überstand führten, wogegen ein Vergleichsversuch mit einem herkömmlichen Flockungsmittel, nämlich Polyacrylamid, nur eine geringe Flockung zeigte.

### Beispiel 6

Eine 8,5 gewichtsprozentige wäßrige Lösung von Natrium-Zellulose-Xanthogenat wurde mit einer wäßrigen Lösung von Natriumhydroxid (4 g/l) auf 4,25 % (als Zellulose) verdünnt.

Das Kationisierungsmittel, eine 40 % wäßrige Lösung von einem Dicyandiamid-Formaldehyd-Kondensatharz (unter dem Handelsnamen SKW Trostberg Melflock C3 erhältlich) wurde mit Wasser auf 2 Gewichtsprozent aktive Konzentration verdünnt.

600 ml der o.a. verdünnten 2 % Dicyandiamid-Formaldehyd-Kondensatharz-Lösung wurden mit einem Rührwerk bei 750 U/min gerührt und dann 940 ml der o.a. auf 4,25 % verdünnten Natrium-Zellulose-Xanthogenatlösung langsam zu dem gerührten Kationisierungsmittel zugegeben.

Diese Mischung, die bereits präzipitierte Partikel enthielt, wurde dann langsam in das Fällungsbad zugegeben. Das Fällungsbad bestand aus 3000 ml einer wäßrigen Lösung die 35 g Schwefelsäure 98%) enthielt, das ebenfalls kontinuierlich gerührt wurde. In diesem Fällungsbad kam es zu einer quantitativen Ausfällung des Produkts. Sofern notwendig wurde mehr Säure zugegeben, um einen pH-Wert von unter 2 zu erreichen.

Das ausgefällte, faserartige Produkt wurde mit einem Trichter mit einem feinen Plastikgewebefilter abfiltriert, in 1000 ml deionisiertem Wasser aufgenommen und geschüttelt. Der pH-Wert wurde mit verdünnter Natriumhydroxidlösung auf 4,5 - 5,5 eingestellt.

Das ausgefällte Produkt wurde mit einem Trichter mit einem feinen Plastikgewebefilter nochmals abfiltriert, wiederholt in 1000 ml deionisertem Wasser aufgenommen, geschüttelt und filtriert bis im Überstand keine signifikante Menge an Kationizität meßbar war.

Während dieser Waschprozedur wurde die verbleibende Kationizität, sofern vorhanden, durch Titration eines Aliquots gegen einen Standard eines anionischen Polymers mit einem Partikelladungsdetektor (µTek PCD 02) titriert oder durch einen geeigneten Farbstoff (ortho-Toluidinblau) als Indikator festgestellt.

Das feuchte Produkt (Feststoffgehalt ca. 12 bis 20 %) wurde vom Filter genommen und nachfolgend in dieser Form gelagert.

### Beispiel 7

Eine 8,5 gewichtsprozentige wäßrige Lösung von Natrium-Zellulose-Xanthogenat wurde mit einer wäßrigen Lösung von Natriumhydroxid (4 g/l) auf 1 % (als Zellulose) verdünnt.

Das Kationisierungsmittel, eine 40 % wäßrige Lösung von einem poly-Diallyl-dimethyl-ammoniumchlorid (unter dem Handelsnamen FLOERGER FL 45 C erhältlich), wurde mit Wasser auf 1 Gewichtsprozent aktive Konzentration verdünnt.

2000 ml der o.a. auf 1 % verdünnten Natrium-Zellulose-Xanthogenat Lösung wurden mit einem stark scherenden Rührwerk gerührt, jedoch ohne Luft in die Lösung zu ziehen. Dann wurden 600 ml der o.a 1 % poly-Diallyl-dimethyl-ammoniumchlorid Lösung in einem Zeitraum von 30 Sekunden in die gerührte Lösung zugegeben. Die so entstehende Mischung wurde eine weitere Minute stark gerührt.

Die Reaktion des Kationisierungsmittels mit der Cellulose-Xanthogenate Lösung bewirkt eine sofortige und steigende Viskositätserhöhung in der Mischung. Wenn, zum Beispiel, die unverdünnten Substanzen Viscose und poly-DADMAC (in den o.a. Feststoffgehalten) zusammengemischt werden, verfestigt sich die Mischung sofort und es kommt zu einer subsequenten Phasentrennung zwischen fest und flüssig.

1000 ml einer wäßrigen Lösung, die 25 g Schwefelsäure(98%) enthielt, wurde zu der gerührten Mischung zugegeben und so die Ausfällung abgeschlossen. Sofern notwendig, wurde mehr Säure zugegeben, um einen pH-Wert von unter 2 zu erreichen.

Das ausgefällte, faserartige Produkt wurde mit einem Trichter mit einem feinen Plastikgewebefilter abfiltriert, in 500 ml deionisiertem Wasser aufgenommen und geschüttelt. Der pH-Wert wurde mit verdünnter Natriumhydroxidlösung auf 4,5 - 5,5 eingestellt.

Das ausgefällte Produkt wurde mit einem Trichter mit einem feinen Plastikgewebefilter nochmals abfiltriert, wiederholt in 500 ml deionisiertem Wasser aufgenommen, geschüttelt und filtriert bis im Überstand keine signifikante Menge an Kationizität meßbar war.

Während dieser Waschprozedur wurde die verbleibende Kationizität, sofern vorhanden, durch Titration eines Aliquots gegen einen Standard eines anionischen Polymers mit einem Partikellladungsdetektor (µTek PCD 02) titriert oder durch einen geeigneten Farbstoff (ortho-Toluidinblau) als Indikator festgestellt.

Das feuchte Produkt (Feststoffgehalt ca. 12 bis 20 %) wurde vom Filter genommen und nachfolgend in dieser Form gelagert.

### Beispiel 8

Die gleiche Arbeitsweise wie in Beispiel 6 wurde auch mit einem anderen Kationisierungsmittel, einer 20 gewichtsprozentigen Lösung von Polyäthylenimin (unter dem Handelsnamen BASF Polymin SK erhältlich) durchgeführt. Die Polyäthylenimin Lösung wurde dabei auf 2 % Konzentration mit Wasser verdünnt. 600 ml dieser verdünnten Lösung des Kationisierungsmittels wurden bei der Umsetzung eingesetzt.

### Beispiel 9

Die gleiche Arbeitsweise wie in Beispiel 6 wurde auch mit einem anderen Kationisierungsmittel, einer 50 gewichtsprozentigen Lösung eines Polyamins (unter dem Handelsnamen FLOERGER FL 17 erhältlich) durchgeführt. Die Polyamin Lösung wurde dabei auf 2% Konzentration mit Wasser verdünnt. 600 ml dieser verdünnten Lösung des Kationisierungsmittels wurden bei der Umsetzung eingesetzt.

### Beispiel 10

Eine 8,5 gewichtsprozentige wäßrige Lösung von Natrium Zellulose Xanthogenat wurde mit einer wäßrigen Lösung von Natriumhydroxid (4 g/l) auf 4,25 % (als Zellulose) verdünnt.

Das Kationisierungsmittel, eine Lösung von reaktiven, kationischen Monomeren (unter dem Handelsnamen Raisio RAISACAT 65 erhältlich), setzte sich aus folgenden Komponenten zusammen (ca. 70%ige Konzentration):

| | |
|---|---|
| 1) 3-Chloro-2-hydroxypropy-trimethyl-ammoniumchlorid | ca. 2 % |
| 2) 2,3-Epoxypropyl-trimethyl-ammoniumchlorid | ca. 66 % |
| 3) 2,3-Dihydroxypropyl-trimethyl-ammoniumchlorid | ca. 3 % |

2,2 g der Handelsware wurden mit deionisiertem Wasser auf 200 ml verdünnt.

470 ml der o.a. auf 4,25 % verdünnten Natrium-Zellulose-Xanthogenat-Lösung wurden mit einem Propellerrührwerk bei 800 U/min gerührt, jedoch ohne Luft in die Lösung zu ziehen. Dann wurden 200 ml der o.a. verdünnten Lösung des Kationisierungsmittels in einem Zeitraum von 30 Sekunden in die gerührte Lösung zugegeben. Die so entstehende Mischung wurde weitere 30 Minuten gerührt.

670 ml einer wäßrigen Lösung, die 18 g Schwefelsäure(98%) enthielt, wurde zu der gerührten Mischung zugegeben und so die Ausfällung abgeschlossen. Sofern notwendig wurde mehr Säure zugegeben, um einen pH-Wert von unter 2 zu erreichen.

Das ausgefällte, faserartige Produkt wurde mit einem Trichter mit einem feinen Plastikgewebefilter abfiltriert, in 500 ml deionisiertem Wasser aufgenommen und geschüttelt. Der pH-Wert wurde mit verdünnter Natriumhydroxidlösung auf 4,5 - 5,5 eingestellt.

Das ausgefällte Produkt wurde mit einem Trichter mit einem feinen Plastikgewebefilter nochmals abfiltriert, wiederholt in 500 ml deionisertem Wasser aufgenommen, geschüttelt und filtriert bis im Überstand keine signifikante Menge an Kationizität meßbar war.

Während dieser Waschprozedur wurde die verbleibende Kationizität, sofern vorhanden, durch Titration eines Aliquots gegen einen Standard eines anionischen Polymers mit einem Partikellladungsdetektor (µTek PCD 02) titriert oder durch einen geeigneten Farbstoff (ortho-Toluidinblau) als Indikator festgestellt.

Das feuchte Produkt (Feststoffgehalt ca. 12 bis 20 %) wurde vom Filter genommen und nachfolgend in dieser Form gelagert.

### Beispiel 11

Die gleiche Arbeitsweise wie in Beispiel 7 wurde auch mit einem anderen Kationisierungsmittel, einer 40 gewichtsprozentigen wäßrigen Lösung eines speziellen, hochverzweigten poly-Diallyl-dimethyl-ammoniumchlorid durchgeführt. Die poly-Diallyl-dimethyl-ammoniumchlorid Lösung wurde dabei wie in Beispiel 7 mit Wasser verdünnt.

### Beispiel 12

Die gleiche Arbeitsweise wie in Beispiel 7 wurde auch mit einem anderen Kationisierungsmittel, einer 48,5 % gewichtsprozentigen wäßrigen Lösung eines speziellen, niedermolekularen poly-Diallyl-dimethl-ammoniumchlorid durchgeführt. Die poly-Diallyl-dimethyl-ammoniumchlorid Lösung wurde dabei wie in Beispiel 7 auf 1 % Konzentration mit Wasser verdünnt.

### Beispiel 13

Die gleiche Arbeitsweise wie in Beispiel 6 wurde auch mit einem anderen Kationisierungsmittel, einer 40 gewichtsprozentigen Lösung eines Copolymers aus Diallyl-dimethl-ammoniumchlorid und Acrylsäure durchgeführt, wobei die Monomerkomponente Acrylsäure weniger als 10 % ausmacht.Die Copolymer Lösung wurde in diesem Beispiel mit Wasser auf 1 % Konzentration verdünnt.

### Beispiel 14

Eine 8,5 % gewichtsprozentige wäßrige Lösung von Natrium-Zellulose-Xanthogenat wurde mit einer wäßrigen Lösung von Natriumhydroxid (4 g/l) auf 2 % (als Zellulose) verdünnt.

Das Kationisierungsmittel, eine 29 % wäßrige Lösung von einem Polyaluminimchlorid (unter dem Handelsnamen Ekokemi EKOFLOCK 70 erhältlich), wurde unverdünnt eingesetzt.

1000 ml der o.a. auf 2 % (als Zellulose) verdünnten Natrium-Zellulose-Xanthogenat Lösung wurden mit einem Propellerrührwerk stark gerührt, jedoch ohne Luft in die Lösung zu ziehen. Dann wurden 21 ml der o.a. unverdünnten Lösung des Kationisierungsmittels in einem Zeitraum von 30 Sekunden in die gerührte Lösung zugegeben. Die so entstehende Mischung wurde für eine weitere Minute stark gerührt.

1000 ml einer wäßrige Lösung die 20 g Schwefelsäure(98%) enthielt, wurde zu der gerührten Mischung zugegeben und so die Ausfällung abgeschlossen. Sofern notwendig wurde mehr Säure zugegeben, um einen pH-Wert von unter 2 zu erreichen.

Das ausgefällte, faserartige Produkt wurde mit einem Trichter mit einem feinen Plastikgewebefilter abfiltriert, in 500 ml deionisiertem Wasser aufgenommen und geschüttelt. Der pH-Wert wurde mit verdünnter Natriumhydroxidlösung auf 3 bis 4 eingestellt.

Das ausgefällte Produkt wurde mit einem Trichter mit einem feinen Plastikgewebefilter nochmals abfiltriert, wiederholt in 500 ml deionisertem Wasser aufgenommen, geschüttelt und filtriert.

Das feuchte Produkt (Feststoffgehalt ca. 12 bis 20 %) wurde vom Filter genommen und nachfolgend in dieser Form gelagert.

### Beispiel 15

Eine 8,5 gewichtsprozentige wäßrige Lösung von Natrium-Zellulose-Xanthogenat wurde mit einer wäßrigen Lösung von Natriumhydroxid (4 g/l) auf 2 % (als Zellulose) verdünnt.

Das Kationisierungsmittel, eine 45 % wäßrige Lösung von einem Natriumaluminat (unter dem Handelsnamen Mare Fimar A 2527 erhältlich), wurde unverdünnt eingesetzt.

1000 ml der o.a. auf 2 % verdünnten Natrium-Zellulose-Xanthogenat Lösung wurden mit einem Propellerrührwerk stark gerührt, jedoch ohne Luft in die Lösung zu ziehen. Dann wurden 24 ml der o.a. unverdünnten Lösung des Kationisierungsmittels in einem Zeitraum von 30 Sekunden in die gerührte Lösung zugegeben. Die so entstehende Mischung wurde für eine weitere Minute stark gerührt.

1000 ml einer wäßrige Lösung die 37 g Schwefelsäure(98%) enthielt, wurde zu der gerührten Mischung zugegeben und so die Ausfällung abgeschlossen. Sofern notwendig wurde mehr Säure zugegeben, um einen pH-Wert von unter 2 zu erreichen.

Das ausgefällte, faserartige Produkt wurde mit einem Trichter mit einem feinen Plastikgewebefilter abfiltriert, in 500 ml deionisiertem Wasser aufgenommen und geschüttelt. Der pH-Wert wurde mit verdünnter Natriumhydroxidlösung auf 3 bis 4 eingestellt.

Das ausgefällte Produkt wurde mit einem Trichter mit einem feinen Plastikgewebefilter nochmals abfiltriert, wiederholt in 500 ml deionisertem Wasser aufgenommen, geschüttelt und filtriert.Das feuchte Produkt (Feststoffgehalt ca. 12 bis 20 %) wurde vom Filter genommen und nachfolgend in dieser Form gelagert.

### Beispiel 16

Die gleiche Arbeisweise wie in Beispiel 7 wurde auch mit einer modifizierten Zellulose (Natrium-Methylzellulose-Xanthogenat) durchgeführt. Dabei wurde niedrigsubstituierte, nicht wasserlösliche Methylzellulose statt der unmodifizierten Zellulose eingesetzt.

### Beispiel 17

Eine Zelluloselösung in Lithiumchlorid, Dimethylacetamid (DMA)und Wasser wird wie folgt hergestellt.

Gebleichter, feucht gelagerter Zellstoff wird zu einer Mischung von Lithiumchlorid und Dimethylacetamid zugegeben, sodaß die Komponenten in folgendem Verhältnis vorhanden sind: 5 Teile Zellulose (trocken), 11 Teile Lithiumchlorid, 82 Teile Dimethylacetamid und etwas Wasser (von dem feuchten Zellstoff).

Diese Mischung wird mit einem stark scherenden Rührwerk homogenisiert und in einer Vakuumflasche über einem Wasserbad beheizt, bis der Wassergehalt in der Mischung weniger als 3 % ist. Trockenstickstoffgas wird durch die Mischung gesprudelt, um die Wasserentfernung zu unterstützen.

Die entstehende Suspension wird in einem Kühlschrank mit 5° C gekühlt und einen Tag bei dieser Temperatur gelagert. Mit periodischem Rühren wird die Auflösung der suspendierten Cellulose unterstützt. Die entstehende Lösung wird auf 50°C erwärmt und durch ein feines Sieb gefiltert.

Eine 40%ige (Gewicht), wäßrige Lösung von einem poly-Diallyldimethyl-ammoniumchlorid (unter dem Handelsnamen FLOERGER FL 45 C erhältlich) wird als Kationisierungsmittel verwendet.

Bezogen auf die gelöste Zellulose wird 10 % Kationisierungsmittel (als aktive Substanz) in unverdünnter Form langsam unter ständigem Rühren zugegeben. Durch die geringe Menge an Wasser, die durch das Kationisierungsmittel in die Lösung gelangt, wird das Lösungsgleichgewicht Zellulose-Lithiumchlorid-Dimethylacetamid-Wasser normalerweise nicht verändert, sodaß die Zellulose nicht präzipitiert, aber die Viskosität der entstehenden Mischung steigt schnell an und die folgende Stufe wird sofort durchgeführt.

Die entstehende Mischung wird bei einer Temperatur von 50° C in den Wirbel von einem gerührten waßrigen Fällungsbad zugegeben, wobei die kationisierte Zellulose auspräzipitieren wird.

Das präzipitierte, fibrinöse Produkt wird von der Mischung durch einen Filtertrichter mit einem feinen Plastiksieb ausfiltriert.

Das ausfiltrierte Produkt wird in entionisiertem Wasser geschüttelt und wieder filtriert. Dieser Waschprozeß eliminiert Restmengen von Salzen und DMA von dem Produkt.

Das Produkt wird noch einmal mit entionisiertem Wasser gewaschen und filtriert. Dieser Vorgang wird solange wiederholt, bis keine bedeutsame Kationizität mehr in dem Filtratwasser meßbar ist.

Das feuchte Produkt (Feststoffgehalt ca. 12 - 20 %) wird vom Filter genommen und nachfolgend in dieser Form gelagert.

### Beispiel 18

Eine Zelluloselösung in N-Methyl-Morpholinoxid (NMMO) wurde wie folgt hergestellt:

Der Wassergehalt einer NMMO/Wasser Mischung, der in dieser Stufe normalerweise 30 % beträgt, wurde analysiert.

3,6 Gew.-% (bezogen auf NMMO) reines Zellulosepulver wurde zur obigen Mischung zugegeben und diese dann in eine Vakuumflasche mit Rührwerk und Begasung mit trockenem Stickstoffgas überführt. Diese Flasche wurde dann in einem Wasserbad auf 95 °C erwärmt, Vakuum angelegt und unter Rühren wurde eine geringe Menge an Stickstoff in die flüssige Phase eingeblasen und so das Wasser schrittweise entfernt.

Bei einer bestimmten Konzentration (ca. 88 % NMMO) Wasser/NMMO löst sich die Zellulose, die Stickstoffbegasung und die Vakuumpumpe wurden dann gestoppt.Bei diesem Experiment wurde eine 40 % Lösung eines poly-Diallyl-dimethylammoniumchlorid (unter dem Handelsnamen FLOERGER FL 45 C erhältlich) als Kationisierungsmittel verwendet.

Bezogen auf die gelöste Zellulose wurden 10 % Kationisierungsmittel (als aktive Substanz) in unverdünnter Form unter Rühren zu der Zelluloselösung zugesetzt. Durch die geringe Menge an Wasser(ca. 0,5%), die durch das Kationisierungsmittel in die NMMO Lösung gelangt, wird das Lösungsgleichgewicht Zellulose-NMMO/Wasser normalerweise nicht verändert, so daß die Zellulose nicht präzipitiert.

Die so produzierte Mischung wurde mit einer Zahnradpumpe durch einen Filter aus Glaswolle und nachfolgend durch eine Spinndüse in ein Wasserbad gefördert, wo die kationisierte Zellulose koagulierte und zu Fasern geformt werden konnte.

Diese Fasern wurden abfiltriert, gewaschen und getrocknet und dann auf etwa 1 cm Länge geschnitten.

### Beispiel 19

Von Carboxymethylzellulose (CMC, Substitutionsgrad etwa 0,55) wurde eine 2 gewichtsprozentige wäßrige Lösung zubereitet und für 1 Stunde gerührt, um die CMC komplett aufzulösen.

Das Kationisierungsmittel, eine 40 % wäßrige Lösung von einem Dicyandiamid-Formaldehyd-Kondensatharz (unter dem Handelsnamen SKW Trostberg Melflock C3 erhältlich), wurde mit Wasser auf 4 Gewichtsprozent Konzentration verdünnt.

1000 ml der o.a. 2 % CMC-Lösung wurden mit einem Propellerrührwerk bei 800 U/min gerührt und 125 ml der o.a. auf 4 % verdünnten wäßrigen Lösung von einem Dicyandiamid-Formaldehyd-Kondensatharz in einem Zeitraum von 10 Sekunden zugegeben. Diese Mischung, die bereits ausgefällte kationisierte Zellulose enthielt, wurde für weitere 5 Minuten gerührt.

Das ausgefällte Produkt wurde mit einem Trichter mit einem feinen Plastikgewebefilter abfiltriert, wiederholt in 500 ml deionisertem Wasser aufgenommen, geschüttelt und filtriert bis im Überstand keine signifikante Menge an Kationizität meßbar war.

Während dieser Waschprozedur wurde die verbleibende Kationizität, sofern vorhanden, durch Titration eines Aliquots gegen einen Standard eines anionischen Polymers mit einem Partikellladungsdetektor (µTek PCD 02) titriert oder durch einen geeigneten Farbstoff (ortho-Toluoidinblau) als Indikator festgestellt.

Das feuchte Produkt (Feststoffgehalt ca. 12 bis 20 %) wurde vom Filter genommen und nachfolgend in dieser Form gelagert.

### Beispiel 20

Der Feststoffgehalt der kationiserten Zellulose aus Beispiel 6 wurde gemessen. Eine Menge an feuchtem Produkt, die 10 g trockenem Produkt entspricht, wird genommen und mit Wasser auf 200 g aufgefüllt. Diese Dispersion wird in eine Jockro-Mühle überführt und dort 10 Minuten bei 1500 rpm gemahlen. Jockro-Mühlen werden im allgemeinen im Papierlabor verwendet, um die Mahlfähigkeit von Fasern für die Papierherstellung zu testen. Die o.a. Mahlparameter entsprechen ungefähr denen, die auch bei Tests von Fasern für die Papierherstellung angewandt werden.

Es wurden auch Mahlungen mit einer Dauer von 5, 15, 30 und 45 Minuten durchgeführt. Nach Messung des Feststoffgehalts wurden die gemahlenen Partikel zu einer 3 gewichtsprozentigen Suspension verdünnt. Das feuchte Produkt (Feststoffgehalt ca. 3%) wurde in dieser Form gelagert.

### Beispiel 21

Die Kationizität der verschiedenen Produkte aus Beispiel 20 wurde durch Titration mit standardisierter 0,001 N Na-Polyäthylen-Sulfonsäure (Na-PES) gemessen, wobei ortho-Toluidinblau als Endpunkt-Indikator verwendet wurde.

Alternativ wurde die Kationizität durch Rücktitration wie folgt bestimmt. Nach obigen Verfahren gewonnenes Produkt wurde mit einem Überschuß von standardisierter 0,001 N Na-Polyäthylen-Sulfonsäure (Na-PES) gemischt und 1 Stunde gerührt. Dann wurden die Feststoffe durch Zentrifugation abgetrennt und ein Aliquot des klaren Überstandes gegen 0,001 N poly-Diallyl-Dimethyl-Ammoniumchlorid (polyDADMAC) im Partikelladungsdetektor titriert. Aus dem Verbrauch an polyDADMAC wurde die Ladung des Produkts berechnet.

Die durch Rücktitration gemessene Kationizität liegt im allgemeinen höher als die direkt gemessene Kationizität. Dies kann dadurch erklärt werden, daß bei der Rücktitration das Reagens aufgrund der längeren Dauer auch in die Zellulosestruktur penetriert und so auch mit den weniger zugänglichen Ladungsträgern reagieren kann.

In der folgenden Tabelle ist die Kationizität des Produkts aus Beispiel 6 in Abhängigkeit von der unterschiedlichen Mahldauer dargestellt. Es zeigt sich, daß mit einem Ansteigen der Mahldauer ein Ansteigen der Kationizität einhergeht, was dadurch erklärt werden kann, daß durch längere Mahlung die Partikelgröße abnimmt und damit die spezifische Oberfläche und die verfügbare Ladung zunimmt.

| Mahldauer in Jockro-Mühle (min) | Kationische Ladung-Trockenprodukt ( µeq/g) |
|---|---|
| 0 | 251 |
| 5 | 394 |
| 10 | 748 |
| 15 | 911 |
| 30 | 978 |
| 45 | 1027 |

### Beispiel 22

Der Stickstoffgehalt des Trockenprodukt aus Beispiel 6 wurde mit Hilfe der Kjeldahl Methode bestimmt.

Ebenso wurde der Stickstoffgehalt des getrockneten Kationisierungsmittels aus Beispiel 6 bestimmt.

Als Referenzwert für den Stickstoffgehalt wurde nichtkationiserte Zellulose, die als Natrium Zellulosexanthogenat in Säure ausgefällt wurde, verwendet. Die Werte lagen hier jedoch unter der Nachweisgrenze dieser Methode.

Durch Vergleich der eingesetzten Menge an Kationisierungsmittel und des Stickstoffgehalts im fertigen Produkt kann die Ausbeute der Reaktion abgeleitet werden. Sie liegt typischerweiser, je nach Wahl des Kationisierungsmittels, bei 60 - 90%.

### Beispiel 23

Der Feststoffgehalt von kationisierter Zellulose, die mit ähnlichen Rohstoffen wie in Beispiel 6 hergestellt wurde, wurde gemessen. Eine Menge an feuchtem Produkt (Feststoffgehalt 15 %), die 380 g trockenem Produkt entspricht, wurde in den Pulper eines Sulzer Escher Wyss P 12 Laborkegelrefiners überführt. Dieser Refiner wird im allgemeinen im Papierlabor verwendet, um die Mahlungsfähigkeit von Fasern für die Papierherstellung zu testen.

Die o.a. Menge an kationisierter Zellulose wurde mit Wasser auf 12,5 l aufgefüllt und 1 Minute dispergiert. Der Slurry wurde dann in den Refinerteil der Apparatur überführt, die eingeschlossene Luft wurde entfernt und das Produkt im Kreislauf 5 Minuten durch den Refiner gepumpt und so gemahlen.

Die Leistungseinstellung wurde während der Mahlung durch eine automatischhe Reglung auf 350 Watt gehalten, die Umdrehungsgeschwindigkeit des Rotors betrug 1500 U/min. Die Mahlungsenergie für die Bearbeitung der kationisierten Zellulose betrug etwa 0,08 kWh/kg.

Die o.a. Mahlparameter entsprechen ungefähr denen, die auch bei der Mahlung von Fasern für die Papierherstellung angewandt werden.

Die Mahlung des Produkts wurde auch mit unterschiedlichen Zeiten durchgeführt (1, 2, 3, 4, 6, 7, 8, 9, 10 Minuten).

Nach der Mahlung wurde wieder der Feststoffgehalt gemessen, das gemahlene Produkt auf 3 % Konzentration verdünnt und so gelagert.

### Beispiel 24

Das Produkt aus Beispiel 6 wurde in einem Heißluftofen bei 105 °C bis zu einer Restfeuchte von 4 bis 8 % getrocknet. In dieser Form konnte das Produkt leicht zerkleinert werden, die Konsistenz ist in etwa vergleichbar mit hartem Brot, und so längere Zeit gelagert werden.

### Beispiel 25

Das getrocknete Produkt aus Beispiel 24 wurde mit Wasser für ca. 10 Minuten befeuchtet und dann in der Jockro-Mühle, wie in Beispiel 20 beschrieben, 10 Minuten gemahlen. Nach der Mahlung wurde wieder der Feststoffgehalt gemessen, das gemahlene Produkt auf 3 % Konzentration verdünnt und so gelagert.

### Beispiel 26

Das getrocknete Produkt aus Beispiel 24 wurde im trockenen Zustand in einer Braun 4045 Kaffeemühle bei der feinsten Einstellung für 5 Minuten gemahlen und nachfolgend in dieser Form gelagert.

### Beispiel 27

Die kationisierte Zellulose aus Beispiel 6 wurde für 10 Minuten gemäß der Vorschrift aus Beispiel 20 gemahlen. Die so erhaltenen feinen Feststoffpartikel wurden mit einem feinen Plastikgewebesieb aus dem gemahlenen Slurry ausgefiltert und nachfolgend bei 90 °C getrocknet. In dieser Form konnte das Produkt leicht zerkleinert werden, in etwa vergleichbar mit hartem Brot, und wurde in dieser Form gelagert.

### Beispiel 28

Das Produkt aus Beispiel 20 wurde in einer Laborzentrifuge für 5 Minuten bei 1000 U/min zentrifugiert, der wäßrige Überstand wurde dann dekantiert. Die in den Röhrchen verbleibende pastöse Masse hatte einen Feststoffgehalt von etwa 18 % und wurde in dieser Form gelagert.

### Beispiel 29

Das im Beispiel 28 hergestellte Produkt wurde mit Wasser auf etwa 3 % verdünnt und langsam gerührt. Das sehr feine, pastöse Produkt konnte so ganz leicht und in kurzer Zeit wieder in Wasser dispergiert werden.

### Beispiel 30

Das im Beispiel 28 hergestellte Produkt wurde zu einer Lösung eines wasserlöslichen, kationischen Polyacrylamids (FLOERGER FO 4190), wie es bei der Schlammentwässerung Verwendung findet, zugegeben. In diesem Fall wurden 5 % der kationisierten Zellulose in Bezug auf das Trockengewicht des kationischen Polyacrylamids zugegeben.

Die Mischung wurde langsam gerührt, das Produkt konnte so sehr leicht und in kurzer Zeit in der Polyacrylamidlösung dispergiert werden.

### Beispiel 31

Das getrocknete Produkt aus Beispiel 27 wurde mit Wasser auf eine Konzentration von 3 % gebracht und für 10 Minuten gerührt. Dann wurde in einem Mixer mit hoher Scherkraft für 5 Minuten dispergiert, wodurch sich eine homogene Suspension ergab.

### Beispiel 32

Das in Beispiel 20 mit 10 Minuten Mahlzeit hergestellte Produkt wurde langsam gerührt, um das Produkt gleichmäßig dispergiert zu halten. Nach Abschalten des Rührwerks war nach ca. 1 Stunde eine teilweise Sedimentation der kationisierten Zellulosepartikel zu beobachten.

Nach einigen Tagen bildete sich ein pastöses Sediment, das ca. 50 % des Volumens der Flüssigkeit ausmachte. Wurde der Rührer wieder eingeschaltet, so konnte dieses Sediment leicht wieder gleichmäßig im Wasser dispergiert werden.

Das so verdünnte Produkt mit etwa 3 % Feststoffgehalt wurde mit einer Membranpumpe (23 l/h Maximalleistung), die mit Kugelventilen an der Saug- und Druckseite, sowie entsprechenden Schläuchen mit 16 mm Innendurchmesser ausgerüstet war, im Kreis gepumpt. Auch nach 24 Stunden kontinuierlichen Umpumpens konnte keine Reduktion der Pumpenleistung gemessen werden.

Ein anderer Teil des dispergierten Produkts (Feststoffkonzentration ebenfalls 3 %) wurde mit einer kleinen 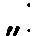 Mohno" Schneckenpumpe (Maximalleistung 20 l/h), die mit einem Gummistator für wäßrige Medien ausgerüstet war, im Kreis gepumpt. Auch nach 24 Stunden kontinuierlichen Umpumpens konnte keine Reduktion der Pumpenleistung gemessen werden.

### Beispiel 33

### Entwässerung von biologischem Schlamm

Kationische Zellulose aus Beispiel 20 wurde als 3 % Dispersion in Kombination mit einem bei der Schlammentwässerung nach dem Stand der Technik verwendeten kationischen, wasserlöslichen Flockungsmittel auf der Basis von Polyacrylamid (unter dem Handelsnamen Allied Colloids DP7-5636) verwendet. Dadurch kam es zu einer beschleunigten Entwässerung des biologischen Schlamms und einer Steigerung des Feststoffgehalts des entwässerten Schlamms gegenüber der alleinigen Verwendung des kationischen Polyacrylamidflockungsmittels.

Der bei diesem Betriebsversuch verwendete Schlamm stammt aus einer Kläranlage, die mit kommunalem und industriellem Abwasser beschickt wird und enthält eine Mischung aus primärem und biologischem Schlamm. Entnommen wurde dieser Schlamm zwischen der Schlammeindickung nach dem Faulturm und der Schlammpresse, noch vor der Dosierung von Fällungs-/Flockungsmitteln. Der Feststoffgehalt betrug etwa 2 %.

Das routinemäßig an dieser Anlage verwendete pulverförmige Polymer wurde als wäßrige 0,3 gewichtsprozentige Lösung angesetzt. Dieses kationische, wasserlösliche Polymer wurde nach einer Reihe von Optimierungsversuchen als das am besten geeignete Produkt ausgewählt.

Die kationisierte Zellulose wurde mit Wasser weiter auf 0,3 % Feststoffgehalt verdünnt d.h. daß jede Mischung der zwei Produkte immer die gleiche Konzentration an aktiven Inhaltsstoffen aufweist.

Für die Laborversuche wurde die folgende Versuchsanordnung verwendet:
1) In ein Britt-jar Entwässerungstestgerät (siehe beiliegendes Diagramm) wurde ein vorher gewogenes Schwarzbandfilter (Schleicher & Schüll 589, 110 mm Durchmesser, aschefrei) eingelegt. Das normal für Entwässerungstest im Papierlabor eingesetzte Sieb sowie der Präzisionsrührer wurden nicht verwendet.
2) Der Auslaufschlauch mit dem verschließbaren Ventil wurde mit einem biegsamen Silikonschlauch mit einem auf einer Waage stehenden Gefäß verbunden. Die Waage wurde so programmiert, daß in definierten Zeitabständen der Gewichtswert an einen Computer gesendet und dort aufgezeichnet wurde. Dadurch konnten Entwässerungskurven mit dem Gewicht des Filtrats gegen die Zeit aufgezeichnet werden. Das Auffanggefäß war ferner mit einem flexiblen Schlauch mit einer Vakuumpumpe verbunden, so daß ein definiertes Vakuum bei der Entwässerung einstellbar war.
3) Der mit dem Britt-jar mitgelieferte Präzisionsrührer wurde installiert, so daß der Inhalt eines 500 ml Becherglases gerührt werden konnte.
4) Filterpapiere (Schleicher & Schüll 589, Schwarzband, 110 mm Durchmesser); Dosierspritzen, Waage, Trocknungsofen usw.

### Folgende Meßmethode wurde angewendet:

Eine Reihe von Flockungsmittellösungen wurde angesetzt, indem 0,3 % kationisierte Zellulose Dispersion mit dem 0,3 % kationischen, wasserlöslichen Polyacraylamid (PAA) - Flockungsmittel gemischt wurde, so daß von reinem PAA über verschiedene Mischungen zu reiner kationisierter Zellulose verschiedene Abstufungen vorhanden waren. Die Konzentration an aktiven Inhaltsstoffen war in allen Mischungen gleich.

500 ml des frischen unbehandelten Schlamms mit 2 % Feststoffgehalt wurden in ein Becherglas überführt und für 1 min bei 200 U/min gerührt. Dann wurden mit einer Dosierspritze 15 ml des Flockungsmittels zugegeben (45 mg). Diese Dosierung entspricht dem an der Anlage verwendeten Wert.

Der so behandelte Schlamm wurde für weitere 2 Minuten langsam gemischt. In der Zwischenzeit wurde die Vakkuumpumpe eingeschaltet, damit sich der Unterdruck stabilisierte. Das Filterpapier im Britt-jar wurde befeuchtet und die Waage auf den Nullpunkt tariert.

130 ml des geflockten Schlamms aus dem Becherglas wurden in den Britt-jar Behälter gegeben, wodurch sich ein etwa 1,5 cm tiefes Schlammbett bildete. Das Ventil zwischen Britt-jar und Auffanggefäß wurde geöffnet und die Datenübertragung von der Waage auf den Computer gestartet.

Das Gewicht des Filtrats im Auffanggefäß wurde so automatisch während der Entwässerung aufgezeichnet. Nach Abschluß der Entwässerungsphase, nachdem keine Flüssigkeit mehr in das Auffanggefäß gelangte und Luft durch den Schlamm in das Auffangggefäß gezogen wurde bzw. bei schlechter Entwässerung der Filter durch die Feinstoffe blockiert war, wurde der Test beendet. Der Feststoffgehalt des auf dem Filter verbleibenden Schlamms wurde bestimmt. Vom Filtrat wurde die Trübe sowie der chemische Sauerstoffbedarf (CSB) bestimmt.

Diese Prozedur wurde für verschiedene Flockungsmittel angewandt. Das jeweils gemessene Gewicht des Filtrats bei den einzelnen Flockungsmitteln wurde gegen die Zeit aufgetragen. Ebenso wurde der Trockensubstanzgehalt sowie Trübe des Filtrats und CSB in einer Tabelle den einzelnen Flockungsmitteln gegenübergestellt.

### Ergebnisse:

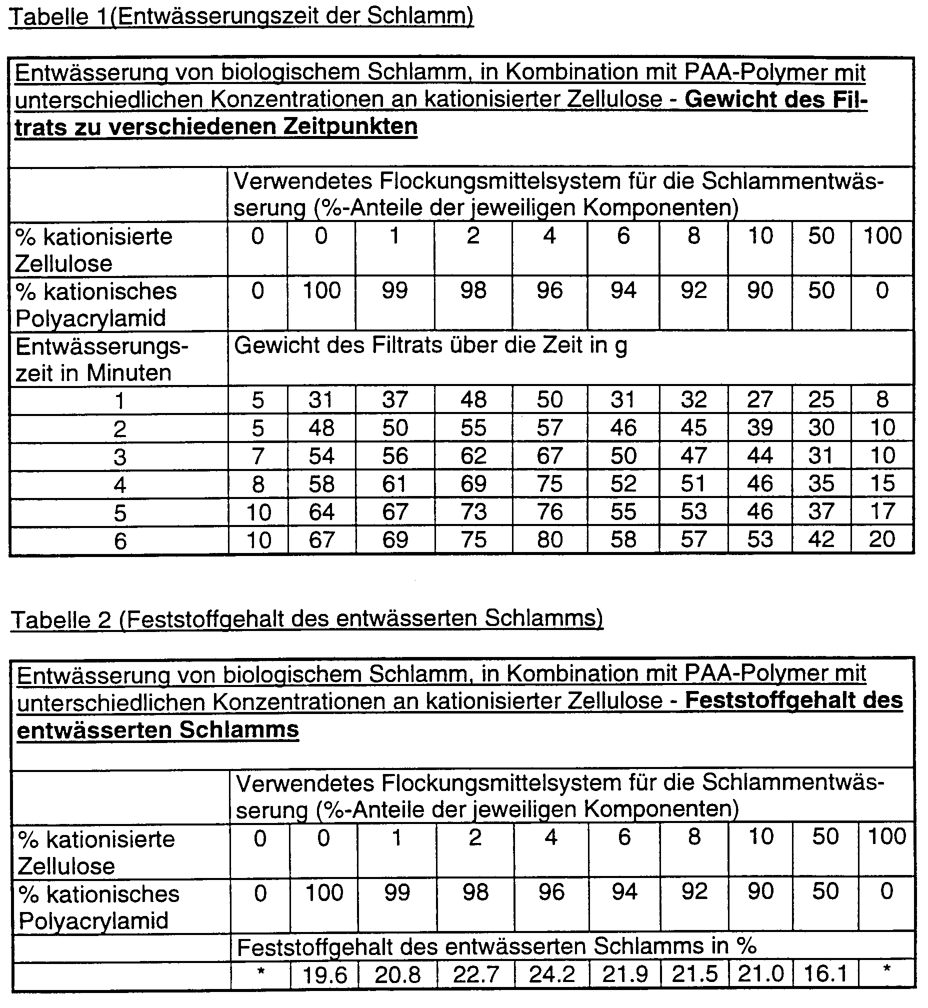

Anmerkung: Die mit einem * bezeichneten Proben konnten nicht in annehmbarer Zeit entwässert werden, da der Filter durch Feinstoffe blockiert war.

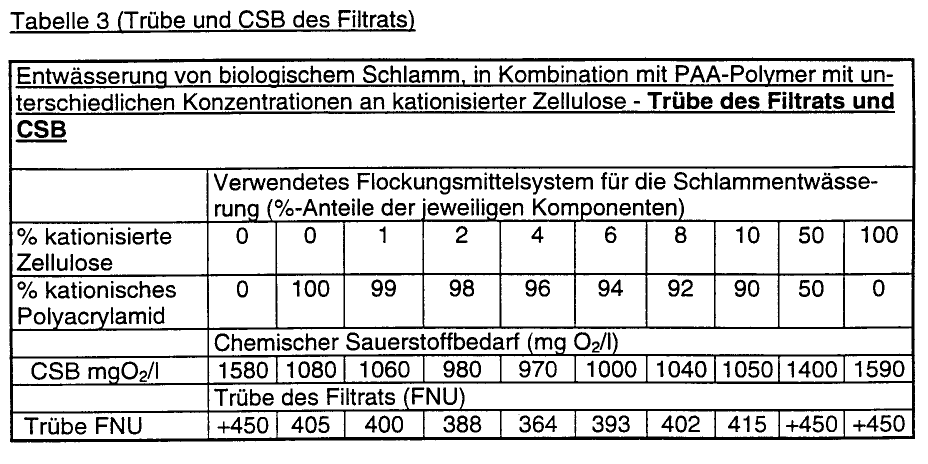

Der Ersatz von etwa 4 % des wasserlöslichen, kationischen PAA-Polymers durch kationisierte, wasserunlösliche, gemahlene Zellstoffpartikel ergab einen überrraschenden und signifikanten Anstieg in der Entwässerungsgeschwindigkeit für diesen Schlamm, sowie einen markanten Anstieg im Feststoffgehalt des entwässerten Schlamms und eine Reduktion der Trübe sowie des chemischen Sauerstoffbedarfs im Filtrat.

### Beispiel 34

### Entwässerung von Primärschlamm

Gleich wie in Beispiel 33 wurde auch dieser Schlamm getestet, mit Ausnahme der folgenden Punkte:

Verwendet wurde die in Beispiel 7 mit poly-DADMAC als Kationiserungsmittel hergestellte kationisierte Zellulose, die mit der in Beispiel 20 beschriebenen Methode 10 Minuten gemahlen wurde.

Der in diesem Beispiel verwendete Schlamm stammte von einer industriellen, mechanischen Kläranlage, wo das Abwasser normalerweise gefällt, sedimentiert, das Sediment nochmals in einem Eindicker gesammelt und dann nach Behandlung mit einem wasserlöslichen, kationischen PAA-Polymer mit einer Siebbandpresse entwässert wird.

Das standardmäßig an dieser Anlage verwendete Produkt ist unter dem Handelsnamen Floerger FO 4190 bekannt. Der für die Laborversuche verwendete Schlamm wurde wiederum an einer Stelle zwischen dem Eindicker und der Siebbandpresse genommen, wobei noch keine Flockungsmittel dosiert worden waren. Der Feststoffgehalt dieses Schlamms betrug 2 %.

### Ergebnisse:

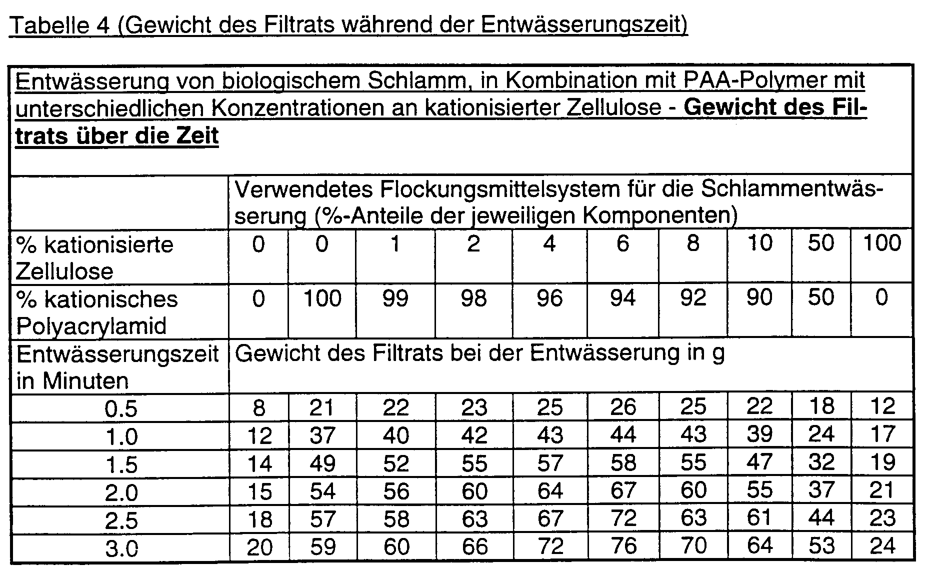

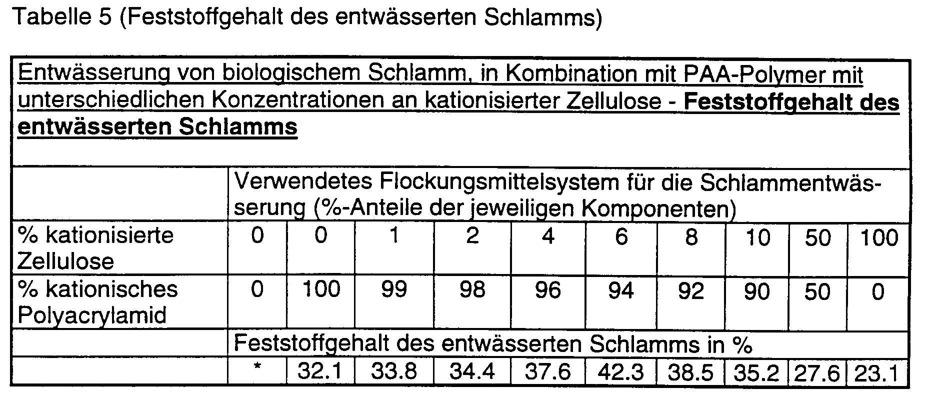

Anmerkung: Die mit einem * bezeichneten Proben konnten nicht in annehmbarer Zeit entwässert werden, da der Filter durch Feinstoffe blockiert war.

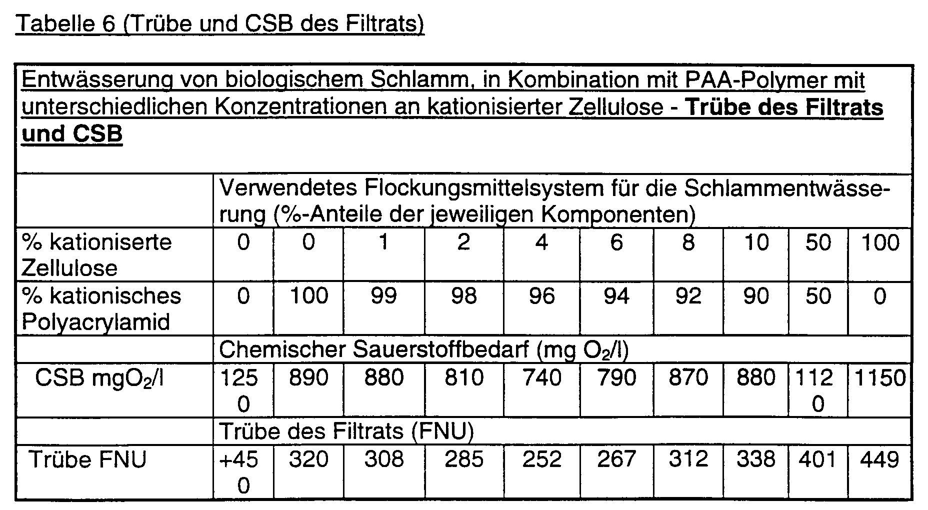

Der Ersatz von etwa 6 % des wasserlöslichen, kationischen PAA-Polymers durch kationisierte, wasserunlösliche, gemahlene Zellstoffpartikel ergab einen überrraschenden und signifikanten Anstieg in der Entwässerungsgeschwindigkeit für diesen Schlamm, sowie einen markanten Anstieg im Feststoffgehalt des entwässerten Schlamms und eine Reduktion der Trübe sowie des chemischen Sauerstoffbedarfs im Filtrat.

### Beispiel 35

### Koagulationsmittel bei der Abwasserbehandlung

Waschwasser von einer Papierstreichmaschine enthält oft anionisch geladenen Latex, der ein ständiges Problem als Störstoff darstellt, wenn dieses Waschwasser, wie es wünschenswert ist, bei der Papierherstellung wiederverwendet werden soll. So ist es im allgemeinen notwendig, daß dieses Waschwasser durch Neutralisation koaguliert wird, damit es als Verdünnungswasser an der Papiermaschine wiederverwendet werden kann oder in die Abwasserrreinigungsanlage geleitet werden kann.

Normalerweise werden zu diesem Zweck Koaguliermittel entweder auf der Basis wasserlöslicher, hochkationischer Polymere oder Lösungen von mehrfach positiv geladenen Metallionen oder Kombinationen aus beiden eingesetzte

In diesem Beispiel wird gezeigt, wie durch Zugabe von kationisierter Zellulose die Elimination von anionischen, kolloidalen Substanzen aus dem Wasser erreicht werden kann. Nachfolgend wird auch die Sedimentation dieser Inhaltstoffe durch Behandlung mit herkömmlichen Chemikalien erleichtert.

Eine frische Probe des Abwassers aus einer Papierstreichmaschine wurde genommen. Durch Titration mit einem µTek PCD-02 Titrationssystem wurde die Ladung, die hoch anionisch war, gemessen. Auch die Trübe und der chemische Sauerstoffbedarf waren sehr hoch.

Als Referenz wurde eine mit einem Standardfällungsmittel (Polyaluminiumchlorid (PAC)) behandelte Probe, die nachfolgend mit ***zwei Typen eines*** wasserlöslichen PAA-Polymers (***anionisch + kationisch***) geflockt wurde, herangezogen.

Zur Abwasserprobe wurden etwa 10 % kationisierte Zellulose, bezogen auf die Menge des Trockengewichts des PAA-Polymers, zugegeben und für eine definierte Zeit gemischt. Danach wurde die normal eingesetzte Menge an PAC zudosiert, gefolgt von der um das Gewicht der zugegebenen kationiserten Zellulose verminderten Menge an PAA-Polymer (= 90 % der Standardmenge)

Das so behandelte Abwasser wurde in einen geeichten Meßzylinder gefüllt und für eine Stunde stehengelassen.

Danach wurde das Schlammvolumen bestimmt. Ein kleines Volumen zeigt eine höhere und damit vorteilhaftere Schlammdichte an. Ebenso wurde die Trübe sowie der CSB bestimmt. Da dieses Wasser normalerweise als Prozesswasser wiederverwendet werden soll oder in die Abwasserreinigungsanlage geleitet wird, ist eine geringe Trübe sowie ein niedriger CSB wünschenswert.

**Tabelle 7**

| (Volumen des Sediments, Trübe sowie CSB) Anwendung von kationisierter Zellulose bei der Koagulation und Sedimention von Abwasser einer Papierstreichmaschne. **Untersuchung der Sedimentation in einem 100 ml Zylinder** | | | |
|---|---|---|---|
| Verwendetes Koagulations-/Flockungsmittelsystem | Volumen des Sediments nach 1 h in ml | Trübe des Überstandes in FNU | CSB des Überstandes in mg O₂/l |
| keines | 30 (schlechte Abtrennung des Sediments) | +450 | 1640 |
| PAC + PAA (kationisch) | 12 | 44 | 260 |
| PAC + PAA (anionisch) | 14 | 36 | 290 |
| kat. Zellulose + PAC + PAA (kationisch) | 10 | 35 | 230 |
| kat. Zellulose + PAC + PAA (anionisch) | 10 | 33 | 220 |

Überraschenderweise wurde durch die Vorbehandlung des Abwassers mit kationisierter Zellulose die Sedimentation, Trübe und CSB deutlich gegenüber der Standardbehandlung verbessert. ***Diese positiven Eigenschaften wurden sowohl in Kombination mit einem kationischen als auch anionischen PAA erkannt.***

### Beispiel 36

### Papierherstellung

Kationisierte Zellulose aus Beispiel 6 wurde wie in Beispiel 20 für 10 Minuten gemahlen und auf eine 3 % Suspension verdünnt. Dieses Produkt wurde in einer Versuchsanlage für Papierretentionssysteme entweder als Ersatz- oder zusätzliche Komponente eingesetzt, wodurch sich verschiedene Verbesserungen für den Papierherstellungsprozess ergaben.

### Retention/Fixierung

Verwendet wurde ein Britt-jar Entwässerungstestgerät.

### Teil 1) Einsatz bei holzfreiem Feinpapierstoff

Im ersten Teil dieses Beispiels wurde aus einer Mischung von holzfreiem, gemahlenen Kurz- und Langfasern sowie gemahlenem Calciumcarbonatfüllstoff ein synthetischer Papierstoff hergestellt. Dieser Dickstoff wurde verdünnt, Salze wurden für die Einstellung der Leitfähigkeit zugegeben und der pH-Wert auf neutral eingestellt. Das Filtrat dieses Stoffs wies eine negative Ladung auf, die auf die gelösten oder kolloidal gelösten Substanzen zurückzuführen ist (anionic trash).

Diese anionische Ladung wird als kationischer Bedarf gemessen und ergibt sich aus der Titration eines Aliquots des Filtrats mit einem standardisierten, kationischen Polymer (0,001 N Polyethlenimin) in einem Partikelladungsdetektor oder unter Verwendung von passenden Farbindikatoren als Endpunktindikator wie etwa ortho-Toluidinblau.

Eine Reihe von Entwässerungstests wurden durchgeführt, wobei verschiedene Retentionssysteme verwendet wurden und auch einzelnen Komponenten dieser Systeme durch die o.a. kationiserte Zellulose ausgetauscht wurden. Diese Entwässerungstests wurden mit laufendem Britt-jar Rührwerk durchgeführt.

In den Fällen, wo kationisierte Zellulose als Teil des Retentionssystems verwendet wurde, wurde diese vor der zweiten Komponente, einem wasserlöslichen Polymer, zugegeben. Die Zweitkomponente wurde erst kurz vor dem Start der Entwässerung zugegeben.

Der Feststoffgehalt des Britt-jar Filtrats (A) wurde gemessen, indem das Filtrat durch ein abgewogenes, aschefreies Filterpapier filtriert wurde, wodurch das Sekundärfiltrat (B) gewonnen wurde. Das Filterpapier wurde verascht, um den Anteil der Füllstoffretention zu messen. Das Sekundärfiltrat (B) wurde auf chemischen Sauerstoffbedarf (CSB), Trübe und verbleibende anionische Ladung bzw. kationischen Bedarf, wie oben beschrieben, untersucht.

Die Ergebnisse dieser Versuchsserie sind in Tabelle 8 dargestellt.

**Tabelle 8**

| Effekt von kationisierter Zellulose in Kombination mit einem wasserlöslichen Polymer auf die Gesamtretention, Füllstoffretention, etc. Britt-jar Test mit Feinpapierstoff, Karbonat Füllstoff und neutralen Bedingungen. | | | | | |
|---|---|---|---|---|---|
| | Britt-jar Filtrat | | Britt-jar Sekundärfiltrat | | |
| | Gesamtfeststoff g/l | Füllstoff gehalt g/l | Trübe FNU | CSB mg O₂/l | kationisch er Bedarf mg PSK/l |
| Retentionssystem | | | FNU | mg O₂/l | mg PEI/l |
| kein Retentionssystem (0-Kontrolle) | 2,03 | 1,14 | 445 | 1060 | 49 |
| 0,6% kationisches Polyacrylamid | 1,71 | 1,17 | 294 | 810 | 9,6 |
| 0,3% Kationisches Polyacrylamid + 1.0% Bentonit | 1,59 | 1,22 | 432 | 790 | 18 |
| 0,3% kationisierte Zellulose + 0.3% kationisches Polyacrylamid | 1,34 | 0,95 | 297 | 770 | 8,7 |

### Teil 2) Einsatz bei holzhältigem/deinkstoffhältigem Stoff

Im zweiten Teil der Versuchsserie wurde Papierstoff als Dickstoff direkt aus der Maschinenbütte entnommen. Dieser Stoff enthielt Holzschliff, De-inkstoff, einen geringen Anteil Zellstoffasern und Kaolin als Füllstoff und wurde auf 1 % Konsistenz verdünnt.

Die gleiche Testmethode wie oben wurde auch bei diesem Stoff angewandt. Für die Britt-jar Entwässerungstests wurde diesmal ein wasserlösliches Polyethylenimin als Standard Retentionshilfsmittel verwendet. Teilweise wurde dieses Polyethylenimin, das auch an dieser Papiermaschine das Standardretentionshilfsmittel ist, durch kationiserte Zellulose ersetzt.

Die Ergebnisse dieser Versuchsserie sind in Tabelle 9 dargestellt.

**Tabelle 9**

| Effekt von kationisierter Zellulose in Kombination mit einem wasserlöslichen Polymer auf die Gesamtretention, Füllstoffretention, etc. Britt-jar Test mit Holzschliff/Deinkstoff und Zellstoff, Kaolin als Füllstoff und pseudoneutralen Bedingungen | | | | | |
|---|---|---|---|---|---|
| | Britt-jar Filtrat | | Britt-jar Sekundärfiltrat | | |
| | Gesamtfeststoff g/l | Füllstoff gehalt g/l | Trübe FNU | CSB mg O₂/l | kationisch er Bedarf mg PSK/l |
| Retentionssystem | | | FNU | mgO2/l | mg PEI/l |
| kein Retentionssystem (0-Kontrolle) | 8.8 | 6.2 | 237 | 345 | 41 |
| 0.6% Polyethylenimin | 7.1 | 5.3 | 128 | 242 | 25 |
| 0,3% kationisierte Zellulose + 0.3% Polyethylenimin | 6.6 | 5.0 | 94 | 226 | 21 |

Ersetzt man einen Teil des wasserlöslichen, kationischen Polymers, entweder Polyacrylamid wie in Beispiel 1 oder Polyethylenimin wie in Beispiel 2, durch kationisierte, wasserunlösliche, gemahlene Zellulosepartikel, so ergibt sich ein überrraschender und signifikanter Anstieg in der Retention der Feinstoffe inklusive Füllstoff, sowie eine geringere Trübe, reduzierter chemischen Sauerstoffbedarf und Anionizität und somit eine deutliche Reduktion der gelösten und kolloidal gelösten anionischen Störstoffe im Sekundärfiltrat. Diese Verbesserungen sind für die Papierherstellung natürlicherweise von großer Bedeutung.

### Entwässerung

### Teil 3) Anwendung im Papierstoff (holzfrei, Feinpapier)

In der zweiten Serie wurde der Britt-jar mit einem Ablauf mit einem größeren Durchmesser ausgerüstet, damit so direkt die Entwässerungsgeschwindigkeit des Stoffs in Abhängigkeit vom Stoff, zugesetzten Hilfsmitteln und dem verwendeten Sieb gemessen werden konnte. Während dieser modifizierten Britt-jar Methode wurde das Filtrat in einem auf einer elektronischen Waage stehenden Auffanggefäß gesammelt. Die Waage wurde so programmiert, daß in definierten Zeitintervallen der Gewichtswert an einen Computer gesendet wurde und so Entwässerungskurven mit Gewicht des Filtrats gegen die Zeit aufgenommen werden konnten.

Die Ergebnisse dieser Tests sind in Tabelle 10 dargestellt. Die Prozentangabe des Retentions-/Entwässerungshilfsmittels bezieht sich auf das Trockengewicht Retentionsmittel pro Trockengewicht Papierstoff.

**Tabelle 10**

| Entwässerung von holzfreiem Papierstoff mit Karbonatfüllstoff bei neutralen Bedingungen | | | | |
|---|---|---|---|---|
| | gemessene Zeit in sec bis zum Erreichen definierter Volumina | | | |
| | 50 ml | 100 ml | 150 ml | 200 ml |
| Retentions-/Entwässerungssyte m | Entwässerungszeit in Sekunden | | | |
| kein Retentionssystem | 47 | 125 | 235 | 312 |
| 0.06% kationisches Polyacrylamid (PAA) | 13 | 38 | 87 | 141 |
| 0.03% kat. Zellulose+0.03% kat.PAA | 9 | 22 | 52 | 117 |

Ersetzt man einen Teil des im Normalfall verwendeten wasserlöslichen, kationischen Polymers, in diesem Fall Polyacrylamid, mit wasserunlöslichen, kationisierten, gemahlenen Zellstoffpartikeln, so ergibt sich ein überraschender und signifikanter Anstieg in der Entwässerungsgeschwindigkeit für diesen Papierstoff. Wenn man diese Ergebnisse in die Praxis überträgt, so ergibt sich, daß die Papiermaschine schneller laufen und damit die Produktion erhöht werden kann.

### Beispiel 37

Kationisierte Zellulose aus den Beispielen 6, 7, 8, 9, 10, 11, 12, 13, 14, 15, 16, 17, 18, 19, 25 und 31 wurde als Teilersatz eines wasserlöslichen Polymerretentionssystems bei der Papierherstellung eingesetzt und die Resultate miteinander verglichen. Als Kontrolle wurde das Polymer alleine sowie eine 0-Kontrolle verwendet. Als weitere Referenz wurde Zellulose eingesetzt, die nach der Vorschrift aus Beispiel 7 hergestellt wurde, jedoch ohne Zugabe von Kationiserungsmittel.

Jedes Produkt wurde gemäß Mahl-Methode aus Beispiel 20 für 10 Minuten gemahlen und als 3 % Slurry eingesetzt.

Als Testprozedur wurde die Methode aus Beispiel 36/Teil 1 verwendet. Jedes Produkt wurde in einer Standardkonzentration von 0,4 % kationisierter Zellulose mit 0,2 % wasserlöslichem Polyacrylamid als Retentionssystem zugegeben. Der Papierstoff war ebenfalls gleich wie in Beispiel 36/Teil 1.

Die Ergebnisse sind in Tabelle 11 dargestellt.

**Tabelle 11**

| Britt-jar Test - Vergleich verschiedener kationisierter Zelluloseproukte. **Die Retention wird als Feststoffgehalt im Filtrat bestimmt.** | |
|---|---|
| verwendete kationisierte Zellulose Beispiel Nr. | Gesamtfeststoff im Britt-jar Filtrat g/l |
| keine (0-Kontrolle) | 4.42 |
| nicht kationisierte Zellulose | 4.35 |
| 100% Polymer (keine kat. Zellulose) | 3.01 |
| 6 | 2.42 |
| 7 | 2.72 |
| 8 | 2.66 |
| 9 | 3.00 |
| 10 | 3.21 |
| 11 | 2.56 |
| 12 | 2.90 |
| 13 | 2.87 |
| 14 | 2.58 |
| 15 | 2.77 |
| 16 | 2.94 |
| 17 | 2.80 |
| 19 | 2.91 |
| 25 | 2.70 |
| 31 | 2.87 |

In diesem Britt-jar Test war die Retention mit Einsatz der kationisierten Zellulose stets höher als mit dem Polymer alleine. Durch den Einsatz nichtkationisierter Zellulose war dieser Effekt nicht nachzuweisen.

### Beispiel 38

### Papiereigenschaften

In diesem Beispiel wird gezeigt, daß durch einen Teilersatz konventioneller Retentionssysteme mit kationisierter Zellulose die Festigkeit des Papierblatts bei höherem Füllstoffgehalt gleichbleibt bzw. erhöht wird. Dies ist insofern interessant, als normalerweise durch einen höheren Füllstoffgehalt die Festigkeit abnimmt.

Papierblätter wurden in einem Labor-Blattbildner hergestellt. Als Papierstoff wurde wiederum Stoff wie in Beispiel 36/Teil 1 verwendet, d.h. eine Mischung aus holzfreien Kurz- und Langfasern sowie Calciumcarbonat als Füllstoff.

Die kationisierte Zellulose wurde aus Beispiel 7, mit poly-DADMAC als Kationisierungsmittel und 10 Minuten Mahlung, wie in Beispiel 20 beschrieben, genommen.

Eine Reihe von Papierblättern wurde produziert, indem verschiedene Retentionssysteme verwendet wurden und wiederum ein Teil dieser Retentionshhilfsmittel durch kationisierte Zellulose, wie oben beschrieben, ersetzt wurde.

**Tabelle 12**

| **Eigenschaften von im Labor hergestellten Papierblättern** Holzfrei, Karbonatfüllstoff, neutrale Bedingungen | | | | |
|---|---|---|---|---|
| Retentionssystem | Papiergrammatur g/m² | Füllstoffgehalt % | Luftporosität ml/min | Reißlänge km |
| Keines | 65.1 | 2.2 | 2880 | 5.9 |
| | | | | |
| 0.2 % kat. PAA +1.5 % Bentonit | 66.5 | 13.1 | 2710 | 4.4 |
| 0.6 % kat.PAA | 67.4 | 13.9 | 2850 | 4.3 |
| 0.4 % kat. Zellulose(ex.7) +0.2 % kat. PAA | 67.0 | 15.4 | 2980 | 4.4 |

### Beispiel 39

### Fixiermittel für anionische Störstoffe bei der Papierherstellung

Für den Zweck der Störstoffixierung wurde Produkt aus Beispiel 14 verwendet, das für 10 Minuten gemahlen wurde, wie in Beispiel 20 beschrieben. Behandelt wurde Holzschliff, wie er für die Papierherstellung eingesetzt wird.

Dieser Stoff mit einer Konsistenz von etwa 4 % wurde frisch aus der Zulaufleitung zur Papiermaschine entnommen. Er enthielt ein relativ hohes Niveau an anionischen Störstoffen, wie etwa auf Lignin basierende lösliche und kolloidal lösliche Substanzen, die die Papierherstellung, im speziellen das Retentionssystem, stören.

Die Effizienz von kationisierter Zellulose als Störstoffänger wurde mit anorganischen, kationischen Fixiermitteln (Polyaluminiumchlorid von Ekokemi) und organischen, wasserlöslichen kationischen Polymeren (BASF Catiofast SL) verglichen.

Ebenfalls konnte gezeigt werden, daß es mit herkömmlichen Fixiermitteln bei einer Überdosierung zu einer Überkationisierung des Wasserkreislaufs des Papiermaschinensystems kommen kann, wodurch es wiederum zu negativen18 Auswirkungen auf die Retention kommt.

Kationisierte Zellulose wurde zu 500 ml des Holzschliffs gegeben und für 5 Minuten gemischt. Der so behandelte Stoff wurde anschließend mit Vakuum durch ein Schleicher&Schüll 589 Schwarzbandfilter filtriert und das Filtrat auf Trübe, chemischen Sauerstoffbedarf und kationischen Bedarf untersucht.

Diese anionische Ladung wird als kationischer Bedarf gemessen und ergibt sich aus der Titration eines Aliquots des Filtrats mit einem standardisierten, kationischen Polymer (0,001 N Polyethlenimin) in einem Partikelladungsdetektor oder unter Verwendung von passenden Farbstoffen als Endpunktindikator wie etwa ortho-Toluidinblau. Für das überkationisierte Filtrat wurde eine standardisierte Lösung eines anionischen Polymers (0,001 N Na-PES) verwendet.

Von diesen ersten Tests wurde der kationische Bedarf des Holzschliffs, je nach eingesetztem Fixiermittel, errechnet und dann das Doppelte der jeweils notwendigen Menge zudosiert. Das Ausmaß der Überkationisierung im Filtrat wurde durch Titration gemessen und wird in der Tabelle als negativer kationischer Bedarf ausgedrückt.

**Tabelle 13**

| **Fixierung anionischer Störstoffe in holzhältigem Papierstoff** | | | | |
|---|---|---|---|---|
| Fixiermittel | Zugabe bezogen auf Feststoff % trocken | Trübe im Filtrat FNU | CSB im Filtrat mgO₂/l | kationisch er Bedarf Filtrat mgPSK/l |
| 0-Kontrolle | 0 | 268 | 328 | 57.5 |
| | | | | |
| Polyaluminiumchlorid (PAC) | 0.3% | 220 | 312 | 49.7 |
| PAC - doppelt überdosiert | 3.5% | 262 | 326 | -18.8 |
| | | | | |
| Catiofast SL (organisches Polymer) | 0.05% | 165 | 302 | 40.2 |
| C. SL - doppelt überdosiert | 0.33% | 191 | 366 | -27.5 |
| | | | | |
| Kationisierte Zellulose | 0.1% | 171 | 305 | 47.9 |
| Kat. Zell.-doppelt überdosiert | 1.2% | 167 | 278 | 1.3 |

Die kationisierte Zellulose aus Beispiel 14 eignet sich gegenüber herkömmlichen Fixiermitteln sehr gut für die Fixierung von anionischen Störstoffen, hat jedoch den Vorteil, daß sie, da sie in Wasser unlöslich ist, zu keiner Überkationisierung des Filtrats führt, wie es bei der Dosierung von wasserlöslichen Produkten vorkommt.

### Beispiel 40

### Anfärbeverhalten kationischer Zellulosefäden

In einer Farbflotte mit einer Konzentration von 5 g/l Orange II wird wahlweise die erfindungsgemäße kationisierte Zellulose nach Beispiel 6 oder nichtkationisierte Zellulose aus dem Xanthogenat-Prozeß gefärbt. Verwendet wurden gesponnene Fäden mit 3 dtex. Das Flottenverhältnis beträgt 1:6. Die Färbung erfolgte bei Raumtemperatur über 30 Min. Nach Entfernen der verbrauchten Flotte wird mit entsalztem Wasser nachgewaschen und getrocknet.

### Meßergebnisse:

| | Extinktion der verbrauchten | Weiße ISO | | | |
|---|---|---|---|---|---|
| | Flotte 1:100 verd. | | L | A | B |
| Blindwert | 0,3 | | | | |
| Nichtkat. Zellulose | 1,732 | 15,40 | 71,96 | +38,97 | +42,73 |
| Kat. Zellulose | 0,461 | 1,38 | 37,74 | +51,23 | +44,58 |

### Elrepho 2000 für Weiße/Farbortmessung

### Probenvorbereitung:

Der getrocknete Faden wird auf einen Kartonstreifen, 30 mm Beite, möglichst gleichmäßig gewickelt. Die Wickelstärke muß so hoch sein, daß keine Veränderung des Meßwertes durch die Oberfläche des Kartons erfolgt.

Es zeigt sich bei den Waschungen der Proben, daß das aus kationisierter Zellulose bestehende Fasermaterial eine wesentlich höhere Farbechtheit aufweist als die nichtkationisierte Qualität.

## Patentansprüche

1. Zellulosepartikel, die kationische Gruppen aufweisen, **dadurch gekennzeichnet,** daß die kationischen Gruppen auch im Inneren der Zellulosepartikel, über den gesamten Querschnitt der Partikel verteilt, vorliegen, wobei die Konzentration der kationischen Gruppen von außen nach innen gleich ist oder zunimmt und wenigstens eine kationische Gruppe je 100 Anhydroglucoseeinheiten der Zellulose vorliegt.

2. Zellulosepartikel nach Anspruch 1, **dadurch gekennzeichnet,** daß die kationischen Gruppen von kationischen Polyelektrolyten gebildet sind.

3. Zellulosepartikel nach einem der vorstehenden Ansprüche, **dadurch gekennzeichnet**, daß die kationischen Gruppen kovalent an die Zellulose gebunden sind.

4. Zellulosepartikel nach einem der vorstehenden Ansprüche, **dadurch gekennzeichnet,** daß sie eine mittlere Teilchengröße von 0,001 bis 10 mm, insbesondere 0,1 bis 1 mm, aufweisen.

5. Zellulosepartikel nach einem der vorstehenden Ansprüche, **dadurch gekennzeichnet**, daß sie eine mittlere Teilchengröße von 0,1 bis 1 mm aufweisen.

6. Zellulosepartikel nach einem der vorstehenden Ansprüche, **dadurch gekennzeichnet**, daß die Zellulosepartikel in Kombination mit einem wasserlöslichen Polymer vorliegen.

7. Zellulosepartikel nach Anspruch 6, **dadurch gekennzeichnet**, daß die Zellulosepartikel in Kombination mit einem wasserlöslichen, kationischen Polymer vorliegen.

8. Zellulosepartikel nach einem der Ansprüche 6 oder 7, **dadurch gekennzeichnet**, daß die Zellulosepartikel in Kombination mit Polyacrylamid vorliegen.

9. Verfahren zur Herstellung der Zellulosepartikel nach einem der vorstehenden Ansprüche, **dadurch gekennzeichnet**, daß die Zellulose mit einem Kationisierungsmittel umgesetzt wird.

10. Verfahren nach Anspruch 9, **dadurch gekennzeichnet**, daß als zellulosisches Ausgangsmaterial unsubstituierter Zellstoff, ein Zellulose-Ester oder -Ether, Carboxylmethylzellulose, Hydroxyethylzellulose sowie Zellulosesulfat, Zelluloseacetat, Chitosan oder Alkalizellulose verwendet wird.

11. Verfahren nach Anspruch 9 oder 10, **dadurch gekennzeichnet,** daß die Umsetzung als Feststoffreaktion durchgeführt wird.

12. Verfahren nach Anspruch 11, **dadurch gekennzeichnet**, daß als Zellulose Alkalizellulose verwendet wird, die zur Umsetzung mit dem Kationisierungsmittel geknetet wird.

13. Verfahren nach Anspruch 9 oder 10, **dadurch gekennzeichnet**, daß gelöste Zellulose mit einem Kationisierungsmittel versetzt und die kationisierte gelöste Zellulose zu Zellulosepartikeln ausgefällt wird.

14. Verfahren nach einem der Ansprüche 9 bis 13, **dadurch gekennzeichnet,** daß als Lösungsmittel für die Zellulose N-Methylmorpholin-N-oxid, Lithiumchlorid-Dimethylacetamid und, im Fall wasserlöslicher Zellulosederivate, Wasser verwendet wird.

15. Verfahren nach einem der Ansprüche 9 bis 14, **dadurch gekennzeichnet,** daß als Kationisierungsmittel Aluminiumsalze, kationische Polyelektrolyte oder reaktive Monomere verwendet werden.

16. Verfahren nach Anspruch 15, **dadurch gekennzeichnet**, daß das Gewichtsverhältnis der Aluminiumsalze oder der kationischen Polyelektrolyte zu der Zellulose zwischen 0,03:1 bis 1:1 beträgt.

17. Verfahren nach Anspruch 15, **dadurch gekennzeichnet**, daß die reaktiven Monomere mit der Zellulose in einem solchen Verhältnis umgesetzt werden, daß der Substitutionsgrad höchstens 0,2 beträgt.

18. Verfahren nach Anspruch 15, **dadurch gekennzeichnet**, daß als Aluminiumsalz Polyaluminiumchlorid oder ein Alkalialuminat verwendet wird.

19. Verfahren nach Anspruch 15, **dadurch gekennzeichnet**, daß als kationische Polyelektrolyte Polydialkyl-di-allylammoniumchlorid, Dicyandiamid, Dicyandiamidkondensat, Polyamine oder Ionene verwendet werden.

20. Verfahren nach Anspruch 15, **dadurch gekennzeichnet**, daß als reaktive Monomere primäre, sekundäre oder tertiäre Amine oder quarternäre Ammonium-Basen mit jeweils wenigstens einem mit einer OH-Gruppe der Zellulose umsetzbaren Rest verwendet werden.

21. Verfahren nach Anspruch 20, **dadurch gekennzeichnet**, daß der umsetzbare Rest ein Halogen, eine Epoxygruppe oder eine Iminogruppe ist.

22. Verfahren nach Anspruch 21, **dadurch gekennzeichnet**, daß das reaktive Monomere ein 2-Chlorethan-Trimethylammonium-Salz oder ein Propoxitrimethylammonium-Salz bzw. eine Mischung aus diesen ist.

23. Verfahren nach Anspruch 13, **dadurch gekennzeichnet**, daß die gelöste Zellulose beim Versetzen mit dem Kationisierungsmittel in einer Konzentration von 0,5-4 Gew.-% vorliegt.

24. Verfahren nach Anspruch 13, **dadurch gekennzeichnet**, daß die Regenerierung der gelösten kationischen Zellulose im Fällbad erfolgt.

25. Verwendung der Zellulosepartikel nach einem der Ansprüche 1 bis 8 bei der Papierherstellung.

26. Verwendung der Zellulosepartikel nach Anspruch 25 als Mittel zur Fixierung von Störstoffen im Papier, die bei der Papierherstellung im Wasserkreislauf vorliegen.

27. Verwendung der Zellulosepartikel nach Anspruch 25 als Mittel zur Retention von Feinstoffen im Papier bei der Papierherstellung.

28. Verwendung der Zellulosepartikel nach Anspruch 25 zur Erhöhung der Festigkeit des Papiers bei der Papierherstellung.

29. Verwendung nach einem der Ansprüche 25 bis 28 mit der Maßgabe, daß 0,1-10 kg Zellulosepartikel Pro Tonne Papierstoff (atro) verwendet werden.

30. Verwendung der Zellulosepartikel nach einem der Ansprüche 1 bis 8 als Flockungsmittel.

31. Verwendung nach Anspruch 30 als Flockungsmittel zur Abwasserreinigung.

32. Verwendung der Zellulosepartikel nach einem der Ansprüche 1 bis 8, **dadurch gekennzeichnet,** daß die Zellulosepartikel in Kombination mit einem wasserlöslichen Polymeren eingesetzt werden.

33. Verwendung der Zellulosepartikel nach Anspruch 32, **dadurch gekennzeichnet**, daß die Zellulosepartikel in Kombination mit einem wasserlöslichen, kationischen Polymeren eingesetzt werden.

34. Verwendung der Zellulosepartikel nach Anspruch 32 oder 33, **dadurch gekennzeichnet,** daß die Zellulosepartikel in Kombination mit Polyacrylamid eingesetzt werden.

35. Verwendung der Zellulosepartikel nach einem der Ansprüche 32 bis 34, **dadurch gekennzeichnet,** daß die Zellulosepartikel bei der Schlammentwässerung in Kombination mit einem wasserlöslichen Polymer in einer Menge von 1 bis 10 Gew.-% Zellulosepartikel, bezogen auf wasserlösliches Polymer, eingesetzt werden.

36. Verwendung der Zellulosepartikel nach einem der Ansprüche 32 bis 34, **dadurch gekennzeichnet**, daß die Zellulosepartikel bei der Papierherstellung in Kombination mit einem wasserlöslichen Polymeren in einer Menge von 40 bis 60 Gew.-% Zellulosepartikel, bezogen auf wasserlösliches Polymer, eingesetzt werden.

## Claims

1. Cellulose particles having cationic groups, characterized in that the cationic groups are present even in the interior of the cellulose particles, distributed over the total cross section of the particles, the concentration of cationic groups being constant or increasing from the outside to the inside and at least one cationic group being present per 100 anhydroglucose units of the cellulose.

2. The cellulose particles of claim 1, characterized in that the cationic groups are formed by polyelectrolytes.

3. The cellulose particles of either of the above claims, characterized in that the cationic groups are bound covalently to the cellulose.

4. The cellulose particles of any of the above claims, characterized in that they have a mean particle size of 0.001 to 10 mm, in particular 0.1 to 1 mm.

5. The cellulose particles of any of the above claims, characterized in that they have a mean particle size of 0.1 to 1 mm.

6. The cellulose particles of any of the above claims, characterized in that the cellulose particles are present in combination with a water-soluble polymer.

7. The cellulose particles of claim 6, characterized in that the cellulose particles are present in combination with a water-soluble, cationic polymer.

8. The cellulose particles of either of claims 6 or 7, characterized in that the cellulose particles are present in combination with polyacrylamide.

9. A method for producing the cellulose particles of any of the above claims, characterized in that the cellulose is reacted with a cationizing agent.

10. The method of claim 9, characterized in that the cellulosic starting material used is unsubstituted pulp, a cellulose ester or ether, carboxymethylcellulose, hydroxyethylcellulose and cellulose sulfate, cellulose acetate, chitosan or alkali cellulose.

11. The method of claim 9 or 10, characterized in that the reaction is performed as a solids reaction.

12. The method of claim 11, characterized in that the cellulose used is alkali cellulose which is kneaded for reaction with the cationizing agent.

13. The method of claim 9 or 10, characterized in that dissolved cellulose is mixed with a cationizing agent and the cationized dissolved cellulose is precipitated into cellulose particles.

14. The method of any of claims 9 to 13, characterized in that the solvent used for the cellulose is N-methylmorpholine-N-oxide, lithium chloride dimethylacetamide and, in the case of water-soluble cellulose derivatives, water.

15. The method of any of claims 9 to 14, characterized in that the cationizing agents used are aluminum salts, cationic polyelectrolytes or reactive monomers.

16. The method of claim 15, characterized in that the weight ratio of aluminum salts or cationic polyelectrolytes to cellulose is between 0.03:1 to 1:1.

17. The method of claim 15, characterized in that the reactive monomers are reacted with the cellulose in a ratio such that the degree of substitution is no more than 0.2.

18. The method of claim 15, characterized in that the aluminum salt used is polyaluminum chloride or an alkali aluminate.

19. The method of claim 15, characterized in that the cationic polyelectrolytes used are polydialkyldiallylammonium chloride, dicyandiamide, dicyandiamide condensate, polyamines or ionenes.

20. The method of claim 15, characterized in that the reactive monomers used are primary, secondary or tertiary amines or quaternary ammonium bases each with at least one residue reacting with an OH group of the cellulose.

21. The method of claim 20, characterized in that the reacting residue is a halogen, an epoxy group or an imino group.

22. The method of claim 21, characterized in that the reactive monomer is a 2-chloroethane trimethylammonium salt or a propoxytrimethylammonium salt or a mixture thereof.

23. The method of claim 13, characterized in that the dissolved cellulose when mixed with the cationizing agent is present in a concentration of 0.5 to 4 wt%.

24. The method of claim 13, characterized in that the dissolved cationic cellulose is regenerated in a precipitation bath.

25. Use of the cellulose particles of any of claims 1 to 8 in papermaking.

26. The use of cellulose particles of claim 25 as a means for fixing interfering substances in the paper which are present in the water circuit during papermaking.

27. The use of cellulose particles of claim 25 as a means for retaining fine substances in the paper during papermaking.

28. The use of cellulose particles of claim 25 for increasing the strength of the paper during papermaking.

29. The use of any of claims 25 to 28 on the condition that 0.1 to 10 kg of cellulose particles are used per ton of paper stock (abs. dry).

30. Use of the cellulose particles of any of claims 1 to 8 as a flocculant.

31. The use of claim 30 as a flocculant for waste-water purification.

32. Use of the cellulose particles of any of claims 1 to 8, characterized in that the cellulose particles are used in combination with a water-soluble polymer.

33. The use of cellulose particles of claim 32, characterized in that the cellulose particles are used in combination with a water-soluble, cationic polymer.

34. The use of cellulose particles of claim 32 or 33, characterized in that the cellulose particles are used in combination with polyacrylamide.

35. The use of cellulose particles of any of claims 32 to 34, characterized in that the cellulose particles are used in sludge drying in combination with a water-soluble polymer in a quantity of 1 to 10 wt% of cellulose particles based on water-soluble polymer.

36. The use of cellulose particles of any of claims 32 to 34, characterized in that the cellulose particles are used in papermaking in combination with a water-soluble polymer in a quantity of 40 to 60 wt% of cellulose particles based on water-soluble polymer.

## Revendications

1. Particules de cellulose qui comportent des groupes cationiques, caractérisées en ce que les groupes cationiques sont également présents à l'intérieur des particules de cellulose et répartis sur l'ensemble de la section transversale des particules de manière à ce que la concentration en groupes cationiques de l'extérieur vers l'intérieur soit identique ou croissante et en ce qu'au moins un groupe cationique est présent pour 100 unités d'anhydroglucose de la cellulose.

2. Particules de cellulose selon la revendication 1, caractérisées en ce que les groupes cationiques sont formés de polyélectrolytes cationiques.

3. Particules de cellulose selon l'une des revendications précédentes, caractérisées en ce que les groupes cationiques sont liés de manière covalente à la cellulose.

4. Particules de cellulose selon l'une des revendications précédentes, caractérisées en ce qu'elles ont une taille particulaire moyenne comprise entre 0,01 et 10 mm et de préférence entre 0,1 et 1 mm.

5. Particules de cellulose selon l'une des revendications précédentes, caractérisées en ce qu'elles ont une taille particulaire moyenne comprise entre 0,1 et 1 mm.

6. Particules de cellulose selon l'une des revendications précédentes, caractérisées en ce que les particules de cellulose sont associées à un polymère hydrosoluble.

7. Particules de cellulose selon la revendication 6, caractérisées en ce que les particules de cellulose sont associées à un polymère hydrosoluble cationique.

8. Particules de cellulose selon l'une des revendications 6 ou 7, caractérisées en ce que les particules de cellulose sont associées à un polyacrylamide.

9. Procédé pour préparer des particules de cellulose selon l'une des revendications précédentes, caractérisé en ce que la cellulose a été mise à réagir avec un agent cationique.

10. Procédé selon la revendication 9, caractérisé en ce qu'on utilise à titre de matériau de départ cellulosique de la cellulose non substituée, un éther ou ester de cellulose, la carboxyméthylcellulose, l'hydroxyéthylcellulose ainsi que le sulfate de cellulose, l'acétate de cellulose, le chitosan ou une cellulose alcaline.

11. Procédé selon la revendication 9 ou 10, caractérisé en ce que la réaction est exécutée en milieu solide.

12. Procédé selon la revendication 11, caractérisé en ce qu'on utilise à titre de cellulose, une cellulose alcaline que l'on mélange avec un agent cationique pour la transformer.

13. Procédé selon la revendication 9 ou 10, caractérisé en ce que la cellulose solubilisée est mise à réagir avec un agent cationique et la cellulose soluble cationisée est précipitée sous la forme de particules de cellulose.

14. Procédé selon l'une des revendications 9 à 13, caractérisé en ce qu'on utilise à titre de solvant pour la cellulose, la méthylmorpholine N-oxyde, le chlorure de lithium diméthylacétamide et, dans le cas des dérivés de cellulose hydrosolubles, l'eau.

15. Procédé selon l'une des revendications 9 à 14, caractérisé en ce qu'on utilise à titre d'agent de cationisation un sel d'aluminium, un polyélectrolyte cationique ou un monomère réactif.

16. Procédé selon la revendication 15, caractérisé en ce que le rapport en poids du sel d'aluminium ou du polyélectrolyte cationique sur la cellulose varie de 0,03:1 à 1:1.

17. Procédé selon la revendication 15, caractérisé en ce que le monomère réactif avec la cellulose est présent en une quantité telle que le degré de substitution est au plus de 0,2.

18. Procédé selon la revendication 15, caractérisé en ce qu'on utilise à titre de sel d'aluminium, du polychlorure d'aluminium ou un aluminate alcalin.

19. Procédé selon la revendication 15, caractérisé en ce qu'on utilise à titre de polyélectrolyte cationique ? du chlorure d'aluminium de polydialkyl-di-allyle, du dicyandiamide, un condensat de dicyandiamide ou de la polyamine ionique ou non.

20. Procédé selon la revendication 15, caractérisé en ce qu'on utilise à titre de monomère réactif une amine primaire, secondaire ou tertiaire ou une base d'ammonium quaternaire avec éventuellement au moins un groupe susceptible de réagir avec le groupe OH de la cellulose.

21. Procédé selon la revendication 20, caractérisé en ce que le groupe susceptible de réagir est représenté par un halogène, un groupe époxy ou un groupe imino.

22. Procédé selon la revendication 21, caractérisé en ce que le monomère réactif est un sel de triméthylammonium du 2-chloroéthane ou un sel de propoxytriméthylammonium ou un de leurs mélanges.

23. Procédé selon la revendication 13, caractérisé en ce que la cellulose est solubilisée est présente lors de la réaction avec l'agent cationique à une concentration comprise entre 0,5 et 4 % en poids.

24. Procédé selon la revendication 13, caractérisé en ce que la cellulose cationique solubilisée est régénérée dans le bain de précipitation.

25. Utilisation de particules de cellulose selon l'une des revendications 1 à 8 pour la fabrication du papier.

26. Utilisation de particules de cellulose selon la revendication 25 à titre d'agent pour la fixation de substances perturbatrices dans le papier qui sont présentes dans les circuits d'eau pour la fabrication du papier.

27. Utilisation de particules de cellulose selon la revendication 25 à titre d'agent pour la rétention de pâte fine dans le papier lors de la fabrication du papier.

28. Utilisation de particules de cellulose selon la revendication 25 pour l'augmentation de la solidité du papier lors de la fabrication du papier.

29. Utilisation selon l'une des revendications 25 à 28 avec la réserve que l'on utilise 0,1 à 10 kg de particules de cellulose par tonne de pâte à papier.

30. Utilisation de particules de cellulose selon l'une des revendications 1 à 8 à titre d'agent de floculation.

31. Utilisation selon la revendication 30 à titre d'agent de floculation pour la décantation des eaux usées.

32. Utilisation de particules de cellulose selon l'une des revendications 1 à 8, caractérisée en ce qu'on utilise des particules de cellulose en association avec un polymère hydrosoluble.

33. Utilisation de particules de cellulose selon la revendication 32, caractérisée en ce qu'on utilise les particules de cellulose en association avec un polymère hydrosoluble cationique.

34. Utilisation de particules de cellulose selon la revendication 32 ou 33, caractérisée en ce qu'on utilise les particules de cellulose en association avec de la polyacrylamide.

35. Utilisation de particules de cellulose selon l'une des revendications 32 à 34, caractérisée en ce qu'on utilise les particules de cellulose pour le drainage des boues, en combinaison avec un polymère hydrosoluble en une quantité comprise entre 1 et 10 % en poids de particules de cellulose par rapport au polymère hydrosoluble.

36. Utilisation de particules de cellulose selon l'une des revendications 32 à 34, caractérisée en ce qu'on utilise les particules de cellulose dans la fabrication du papier en association avec un polymère hydrosoluble en une quantité comprise entre 40 à 60 % en poids de particules de cellulose par rapport au polymère hydrosoluble.
